(19) Europäisches Patentamt
European Patent Office
Office européen des brevets

(11) Veröffentlichungsnummer: **0 211 325 A2**

(12) # EUROPÄISCHE PATENTANMELDUNG

(21) Anmeldenummer: 86110092.3

(51) Int.Cl.⁴: **C 09 D 11/02**

(22) Anmeldetag: 23.07.86

(30) Priorität: 08.08.85 DE 3528421
09.01.86 DE 3600351

(43) Veröffentlichungstag der Anmeldung:
25.02.87 Patentblatt 87/9

(84) Benannte Vertragsstaaten:
BE CH DE FR GB IT LI NL SE

(71) Anmelder: BAYER AG
Konzernverwaltung RP Patentabteilung
D-5090 Leverkusen 1 Bayerwerk(DE)

(72) Erfinder: Lorenz, Manfred, Dr.
Roggendorfstrasse 51
D-5000 Köln 80(DE)

(72) Erfinder: Haus, Artur, Dr.
Zum Eschental 8
D-5063 Overath(DE)

(54) **Verfahren zur Herstellung von Tief- und Flexodruckfarben.**

(57) Verfahren zur Herstellung von Tief- und Flexodruckfarben, dadurch gekennzeichnet, daß man Farbstoffe, die im Druckfarbenansatz zu mindestens 1 Gew.-% bei 20°C löslich sind, zusammen mit feindispersen anorganischen Stoffen einsetzt.

EP 0 211 325 A2

0211325

BAYER AKTIENGESELLSCHAFT 5090 Leverkusen, Bayerwerk
Konzernverwaltung RP
Patentabteilung PG/m/c

# Verfahren zur Herstellung von Tief- und Flexodruckfarben

Die Erfindung betrifft ein Verfahren zur Herstellung von Tiefdruck-, insbesondere Illustrationstiefdruck- und Verpackungstiefdruck- und Flexodruckfarben.

Die gebräuchlichen Flexo- und Tiefdruckfarben sind Flüssigkeiten mit einer niedrigen Viskosität von typischerweise 10 bis 100 mPa.s, die im wesentlichen aus Pigmenten, Harzen und Lösungsmittel bestehen. Diese Druckfarben trocknen durch Verdunsten der Lösungsmittel, wobei das Harz und das Pigment auf dem Druckträger zurückbleiben. Es ist wichtig, daß dabei das Pigment möglichst auf der Oberfläche des Druckträgers verbleibt, da ein zu tiefes Eindringen des farbgebenden Mittels in den Druckträger zu einer Verminderung der scheinbaren Farbintensität führt. Beim Bedrucken von dünnen und ungestrichenen Papieren kann es durch zu tiefes Eindringen des farbgebenden Mittels sogar zu einem Durchschlagen bis auf die Rückseite des Papiers kommen, wodurch sowohl Farbstärke als auch Glanz beeinträchtigt werden und außerdem ein sauberes Bedrucken der Rückseite erschwert wird. Durch Verwendung von Spezialpigmenten bei der Herstellung von Illustrationstiefdruckfarben werden bedingt durch die Filterwirkung des saugfähigen Untergrunds die Pigmentteilchen auf oder nahe der Oberfläche zurückgehalten, wobei jedoch wegen der niedrigen Viskosität der Druckfarben und das dadurch bedingte rasche Eindringen auch hier Durchschlagserscheinungen auftreten können. Um so mehr ist mit diesen Schwierigkeiten zu rechnen, wenn man an Stelle von Pigmenten lösliche Farbstoffe verwendet. Da hierbei die Filterwirkung des Druckträgers entfällt, kann der lösliche Farbstoff besonders leicht und tief eindringen. Dies ist der Grund dafür, daß bisher lösliche Farbmittel beim Bedrucken von saugfähigen Bedruckstoffen mit Tief- und Flexodruckfarben nur sehr beschränkt Verwendung gefunden haben, z.B. als sogenannte Schönungsfarbstoffe zusammen mit einem überwiegenden Anteil an Pigmenten. Eine größere Menge an löslichen Farbstoffen würde insbesondere auf dünnen und saugfähigen Papieren das Durchschlagen und Durchscheinen verursachen.

Es wurde nun überraschenderweise gefunden, daß durch Zusatz von feindispersen, anorganischen Stoffen das Durchschlagen von löslichen Farbstoffen weitgehend unterdrückt werden kann.

Das erfindungsgemäße Verfahren zur Herstellung von Tief- und Flexodruckfarben ist somit dadurch gekennzeichnet, daß man Farbstoffe, die im Druckfarbenansatz zu mindestens 1 Gew.-% bei 20°C löslich sind, zusammen mit feindispersen anorganischen Stoffen einsetzt.

Bevorzugt sind solche Farbstoffe, die zu mindestens 3 Gew.-%, besonders bevorzugt zu mindestens 5 Gew.-% im Druckfarbenansatz löslich sind.

Die Tief- und Flexodruckfarben enthalten als Lösungsmittel z.B. aromatische und aliphatisched Kohlenwasserstoffe wie Toluol, Xylol und aliphatische $C_5$-$C_8$-Kohlenwasserstoffe; weiterhin niedermolekulare Alkohole, bevorzugt Ethanol und daneben Methanol, n-Propanol, i-Propanol; niedermolekulare Ester, und zwar bevorzugt Ethylacetat sowie n-Propylacetat, i-Propylacetat- und Butylacetat und niedermolekulare Ketone wie Aceton, Methylethylketon, Cyclohexanon und Methylcyclohexanon. Üblicherweise werden auch Mischungen von Lösungsmitteln wie Mischungen von aromatischen und aliphatischen Kohlenwasserstoffen eingesetzt.

Vorzugsweise dient das neue Verfahren zur Herstellung von solchen Druckfarben, die Lösungsmittel enthalten, deren Verdunstungszahl, bezogen auf Ether = 1, $\leq$ 10 ist, und insbesondere von Druckfarben, bei denen der Anteil dieser leichtflüchtigen Lösungsmittel am Gesamtlösungsmittelgehalt der Druckfarbe 50 - 100 Gew.-%, bevorzugt 75 - 100 Gew.-% beträgt. Zur Definition der Verdunstungszahl und über entsprechende Lösungsmittel s. Ullmann Encyklopädie der technischen Chemie, 4. Aufl., Band 16, S. 289-308.

Beispiele für die in diesen Druckfarben eingesetzten Harze sind:

Gilsonite-Asphalt, kolophoniummodifizierte Harze, z.B. Kalk-, Zink- und Magnesiumsalze von Harzsäuren und ihren Umwandlungsprodukten, Harzester, Maleinatharze, kolophoniummodifizierte Phenolharze, Kohlenwasserstoffharze, Ketonharze, Chlorkautschuk, Nitrocellulose, Polyamidharze, Schellack, Vinylharze u.a.

Geeignete Typen werden z.B. in Karsten, Lackrohstofftabellen, 7. Aufl., Curt R. Vincentz Verlag, aufgeführt.

Bevorzugt dient das neue Verfahren zur Herstellung von Illustrationstiefdruckfarben, besonders bevorzugt zur Herstellung von Illustrationstiefdruckfarben auf Basis Toluol, d.h. von solchen Illustrationstiefdruckfarben, bei denen der Toluolanteil am Lösungsmittelgehalt 10 - 100 Gew.-% beträgt.

Illstrationsdruckfarben enthalten vorzugsweise bezogen auf das Gewicht der Komponenten A), B) und C),

A) etwa 2 bis etwa 20 Gew.-% Farbmittel,
B) etwa 10 bis etwa 40 Gew.-% Harz und
C) etwa 80 bis etwa 50 Gew.-% Lösungsmittel.

Als Lösungsmittel kommen aromatische und aliphatische Kohlenwasserstoffe wie Leichtbenzinsorten, $C_5$-$C_8$-aliphatische Kohlenwasserstoffe, Xylol und besonders bevorzugt Toluol in Betracht. Es können auch Mischungen von aliphatischen und aromatischen Kohlenwasserstoffen eingesetzt werden.

Beim erfindungsgemäßen Verfahren zur Herstellung von Tief- und Flexodruckfarben werden der Farbstoff und der feindisperse anorganische Stoff auf übliche Weise in die Druckfarbe eingearbeitet. Bevorzugt werden solche anorganischen Stoffe eingesetzt, deren spezifische Oberfläche nach BET mindestens 50 $m^2/g$, besonders bevorzugt mindestens 100 $m^2/g$, ganz besonders bevorzugt mindestens 150 $m^2/g$, beträgt. Beispiele für erfindungsgemäß verwendbare anorganische Stoffe sind: Calciumcarbonat, Silicate wie Talk, Pyrophyllit, Glimmer, Kaolin.

Als Zuschlagstoffe haben sich insbesondere Aluminiumhydroxide und ganz besonders Kieselsäure bewährt. Speziell seien Kieselsäuren mit folgenden Oberflächen (nach BET in $m^2/g$) genannt: $130 \pm 25$, $150 \pm 15$, $200 \pm 25$, $300 \pm 30$, $380 \pm 30$.

Die Zuschlagstoffe werden vorzugsweise in Mengen von 0,2 - 2 Gew.-%, bezogen auf das Druckfarbengewicht, besonders bevorzugt 0,4 - 0,9 Gew.-% eingesetzt.

Durch diese Zusätze gelingt es, die Durchschlagsneigung der Farbstoffe weiter zu verringern, wobei Ergebnisse erzielt werden, wie sie sonst nur bei der alleinigen Verwendung von Pigmenten erreicht werden können.

Bei den vorzugsweise eingesetzten feindispersen Kieselsäuren handelt es sich um überwiegend amorphe, mehr oder weniger vernetzte, feinteilige Kieselsäuren mit den o.a. spezifischen Oberflächen. Solche Kieselsäuren sind z.B. aus Ullmanns Encyklopädie der technischen Chemie, 4. Aufl.

Band 21, S. 451-476, bekannt. Die Kieselsäuren können z.B. durch Fällung aus Lösungen oder nach pyrogenen Verfahren erhalten werden; sie können neben überwiegend Kieselsäure auch noch andere Metalloxide und -hydroxide enthalten, z.B. solche des Aluminiums und Titans.

Von Interesse sind insbesondere auch nachbehandelte Kieselsäuren, z.B. solche, die durch Umsetzung mit Alkylhalogensilanen hydrophobiert worden sind oder Reaktionsprodukte von sythetischen Kieselsäuren mit Siliconölen (siehe z.B. Kautschuk, Gummi, Kunststoffe 30, 6 (1977)).

Die Kieselsäuren müssen in der Druckfarbe dispergiert sein. Diese Dispergierung kann in der fertigen Druckfarbe oder in einem Konzentrat erfolgen. Es ist jedoch auch möglich, zunächst eine Dispersion in dem für die Druckfarbe verwendeten Lösungsmittel gegebenenfalls auch in höherer Konzentration herzustellen, wobei man bereits einen Teil oder auch das gesamte Harz zusetzen kann. Geeignete Dispergieraggregate sind z.B.: Rührer, Schnellrührer, Disolver, Perlmühlen und Kugelmühlen oder eine Kombination dieser Aggregate.

Weiterhin kann es vorteilhaft sein, zusätzlich zu den Kieselsäuren noch Netz- und Dispergiermittel für diese zuzusetzen. Besonders geeignete Dispergiermittel sind die Salze starker organophiler Säuren mit aliphatischen Aminen und Polyaminen, die gegebenenfalls Hydroxylgruppen enthalten.

Starke organophile Säuren sind z.B.: $C_{10}$-$C_{20}$-Alkansulfonsäuren, Alkylarylsulfonsäuren wie Dodecylbenzolsulfonsäure, Di-tert.-butylnaphthalinsulfonsäuren, Schwefelsäuremonoester oder Phosphorsäure-mono- oder -diester von Alkanolen oder deren Umsetzungsprodukten mit Ethylenoxid oder Propylenoxid. Solche Alkanole sind z.B. gesättigte oder ungesättigte, geradkettige oder verzweigte $C_4$-$C_{22}$-aliphatische Alkohole wie Butanol, 2-Ethylhexanol, Dodecanol, Tetra-, Hexa- und Octadecylalkohol; Oleylalkohol sowie die Umsetzungsprodukte dieser Alkohole mit 1-20 Mol Ethylen- oder Propylenoxid.

Geeignete aliphatische Amine sind z.B.:

Ethylendiamin, Amine der Formel $H_2N(CH_2CH_2NH)_nH$, mit $n = 2$-$6$, Propylendiamin, Dipropylendiamin, Talgfettpropylendiamin. Als hydroxylgruppenhaltige Amine kommen z.B. solche in Frage, wie sie bei der Umsetzung von Ammoniak oder $C_1$-$C_{20}$-Alkylmono-, -di- oder -polyaminen mit Ethylen- oder Propylenoxid oder mit Epichlorhydrin entstehen.

Beispiele hierfür sind:

Ethanolamin, Di- und Triethanolamin, Tris-[2-(2-hydroxyethoxy)-ethyl]-amin, Bis-(2-hydroxyethyl)-methyl-, -ethyl-, -propyl- oder -butylamin, 2-(2-Aminoethylamino)-ethanol, 2-(Hydroxyethyl)-bis-(2-hydroxypropyl)-amin, Tris-(2-hydroxypropyl)-amin, 3-[-Bis-(2-hydroxyethyl)-amino]-propylamin, Pentahydroxyethyldiethylentriamin, 2,3-Dihydroxypropylamin; die Umsetzungsprodukte von Kokosfettamin, Talgfettamin, Stearylamin und Oleylamin mit 2 Mol Ethylenoxid oder von Talgfettpropylendiamin mit 3 Mol Ethylenoxid.

Diese Dispergiermittel werden in Mengen zwischen 10 und 200 Gew.-%, bevorzugt 50 und 100 Gew.-%, bezogen auf die Kieselsäure zugesetzt.

Als weitere feindisperse Zusatzstoffe kommen z.B. feindisperse Aluminiumhydroxide oder die weitgehend röntgenamorphen Aluminiumhydroxidgele in Frage, wie sie z.B. durch Fällen aus sauren Aluminiumsalzlösungen mit Basen oder nach dem Verfahren der Flammenhydrolyse erhalten werden können. Bevorzugte Aluminiumhydroxide haben eine spezifische Oberfläche nach BET von wenigstens ca. 50 $m^2/g$. Sie können auf gleiche Weise und unter Zusatz der gleichen Dispergiermittel dispergiert werden wie es vorstehend für die Kieselsäuren beschrieben wurde. Auch Mischungen aus feindispersen Aluminiumhydroxiden und Kieselsäuren können erfindungsgmeäß verwendet werden.

Das Eindringen bzw. Durchschlagen einer Druckfarbe kann man prüfen, indem man das Durchscheinen oder Durchschlagen eines Drucks oder Aufstriches der Druckfarbe auf dem Bedruckstoff z.B. einem Druckpapier von der Rückseite visuell oder farbmetrisch beurteilt.

Das Durchschlagen fällt besonders ins Gewicht bei den zunehmend verwendeten, preiswerten Papierqualitäten mit einem Papiergewicht von 42 $g/m^2$ oder weniger.

Das Farbmittel kann auch ein Gemisch verschiedener Farbstoffe sowie insbesondere auch ein Gemisch aus mindestens einem Farbstoff der im Druckfarbenansatz zu mindestens 1 Gew.-% bei 20°C löslich ist und mindestens einem für Tief- oder Flexodruckfarben geeigneten Pigment sein. Diese Mischungen können bis zu 90 Gew.-%, bevorzugt bis zu 50 Gew.-%, Pigment enthalten.

Für den Tief- und Flexodruck geeignete Pigmente sind z.B. C.I. Pigment Yellow 12, 13, 14, 17, 74 und 83, C.I. Pigment Orange 5 und 34, C.I. Pigment Red 2, 53, 57:1, 112, 122, 146 und 148; C.I. Pigment Violet 19, C.I. Pigment Green 7 und 36 sowie C.I. Pigment Black 7.

Im Folgenden werden unter A., B., C. und D Farbstoffe aufgeführt, die sich insbesondere zur Herstellung der erfindungsgemäßen Tief- und Flexodruckfarben eignen:

## A. Pyridonazofarbstoffe

Pyridonazofarbstoffe, die dadurch erhältlich sind, daß man Pyridonazofarbstoffe mit 1-4 Hydroxygruppen oder mit 1-4 Carboxylgruppen mit Di- oder Polyhydroxyverbindungen oder mit Di- oder Polycarbonsäuren unter esterartiger Verknüpfung von mindestens zwei gleichen oder verschiedenen Pyridonazofarbstoffen umsetzt.

Die Pyridonazofarbstoffe mit 1-4 Hydroxygruppen entsprechen vorzugsweise der Formel

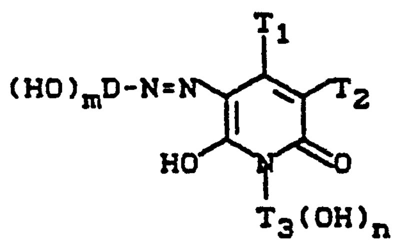

(I)

in der

D den Rest einer Diazokomponente,
$T_1$ Alkyl, Aryl, $-COOT_4$,
$T_2$ H, -CN, $-COOT_4$, $-CONH-T_5(OH)_n$
$T_3$ aliphatischer oder araliphatischer Rest, der durch ein oder mehrere Sauerstoffatome unterbrochen sein kann,
$T_4$ Wasserstoff, Alkyl,
$T_5$ aliphatischer oder araliphatischer Rest, der durch ein oder mehrere Sauerstoffatome unterbrochen sein kann,

m,n 0, 1, 2, 3 oder 4 ist, mit der Maßgabe, daß die Summe aus m + n 1, 2, 3 oder 4 beträgt, bezeichnen.

D steht vorzugsweise für einen Phenylrest der 1-4 Substituenten aus der Reihe gegebenenfalls substituiertes $C_1$-$C_{12}$-Alkyl, $C_2$-$C_{12}$-Alkenyl, Cyclohexyl, Cyclopentyl, Cyclohexenyl, Halogen wie Cl, Br, F, $C_1$-$C_6$-Alkoxy, gegebenenfalls substituiertes Phenoxy, -CN, $-CF_3$, $-NO_2$, gegebenenfalls substituiertes $C_1$-$C_{18}$-Alkylsulfonyl, gegebenenfalls substituiertes Phenylsulfonyl, gegebenenfalls substituiertes Benzylsulfonyl, gegebenenfalls substituiertes Phenoxysulfonyl, gegebenenfalls substituiertes Carbamoyl, gegebenenfalls substituiertes Sulfamoyl tragen kann.

Die Alkylreste in $C_1$-$C_{12}$-Alkyl und $C_1$-$C_{18}$-Alkylsulfonyl können z.B. durch -OH, $C_1$-$C_6$-Alkoxy oder -CN substituiert sein. Die Phenylreste in Phenoxy, Phenylsulfonyl, Phenoxysulfonyl und Benzylsulfonyl können z.B. durch $C_1$-$C_4$-Alkyl oder Halogen wie Cl und Br substituiert sein. Die Carbamoylgruppen tragen vorzugsweise zwei gleiche oder verschiedene Substituenten aus der Reihe $C_1$-$C_{18}$-Alkyl und $C_2$-$C_{18}$-Alkenyl, die z.B. durch -OH substituiert sein können, $C_4$- $C_9$-Alkoxyalkyl, Aryloxyalkyl, $C_9$-$C_{11}$-Aralkoxyalkyl, $C_7$-$C_{11}$-Aralkyl, $C_4$-$C_{13}$-Acyloxyalkyl, $C_6$-$C_{14}$-Alkoxycarbonyloxyalkyl, $C_6$-$C_{12}$-Alkylaminocarbonyloxyalkyl, $C_4$-$C_9$-Dialkylaminoalkyl; entsprechende Diazokomponenten sind aus der DE-A1-3 111 648 bekannt.

Die Sulfamoylgruppen tragen bevorzugt 1 oder 2 Substituenten aus der Reihe $C_1$-$C_{18}$-Alkyl, gegebenenfalls durch O unterbrochenes und gegebenenfalls durch Hydroxy oder Phenoxy substituiertes $C_1$-$C_{12}$-Alkyl oder $C_7$-$C_{11}$-Aralkyl; entsprechende Diazokomponenten sind aus der EP-A1-18567 bekannt.

Als Beispiele für Diazokomponenten seien genannt:

Anilin, o-, m- und p-Toluidin, o- und p-Ethylanilin, 2,3-Dimethylanilin, 3,4-Dimethylanilin, 2,4-Dimethylanilin, 2,5-Dimethylanilin, o-i-Propylanilin, p-i-Propylanilin, 2,4,5- und 2,3,5-Trimethylanilin, 2-Methyl-5-i-propylanilin, 4-tert.-Butylanilin, 4-sec.-Butylanilin, Anlin, das durch geradkettiges oder verzweigtes $C_{12}H_{25}$-Alkyl o- oder p-ständig substituiert ist, 4-Cyclohexylanilin, 4-Cyclohexyl-2-methylanilin, 4-(1-Cyclohexen-1-yl)-anilin, o-, m- und p-Chloranilin, 2,3-, 2,4-, 2,5- und 3,4-Dichloranilin, 5-Chlor-2-methylanilin, 4-Chlor-2-methylanilin, 3-Chlor-2-methylanilin, 2-Chlor-5-methylanilin, 4-Chlor-3-methylanilin, 3-Chlor-4-methylanilin, 2-Chlor-3,4-dimethylanilin, 5-Chlor-2,4-dimethylanilin, 4-Chlor-2,5-dimethylanilin, o-, m- und p-Nitroanilin, 2-Chlor-4-nitroanilin, 2-Nitro-4-chloranilin, 2-Methyl-4-nitroanilin, 4-Methyl-2-nitroanilin, 2,4-Dimethyl-5-nitroanilin, 2,5-Dimethyl-4-nitroanilin, 4-i-Propyl-2-nitroanilin, 4-tert.-Butyl-2-nitroanilin, 4-Cyclohexyl-2-nitroanilin, o-, m- und p-Methoxyanilin, 2-Ethoxy- und 4-Ethoxyanilin, 2-Phenoxyanilin, 2-(2-Methylphenoxy)-anilin, 5-Chlor-2-methoxyanilin, 5-Chlor-2-phenoxy-anilin, 5-Chlor-2-(4-chlorphenoxy)-anilin, 4,5-Dichlor-2-methoxyanilin, 2-Methoxy-5-nitro-anilin, 2-Methoxy-4-nitroanilin, 3-Chlor-4-methoxyanilin, 4-Methoxy-2-nitro-anilin, 4-Ethoxy-2-nitroanilin, 4-Ethoxy-3-nitroanilin, 3-Methoxy-4-methylanilin, 4-Methoxy-2-methylanilin, 2-Methoxy-5-methylanilin, 2-Ethoxy-5-methylanilin, 4-Chlor-2-methoxy-5-methylanilin, 4-Chlor-2,5-dimethoxyanilin, 2,5-Dimethoxy-4-nitroanilin, 2-(Phenylsulfonyl)-anilin, 2-(Methylsulfonyl)-4-nitroanilin, 2-Methoxy-5-(phenylsulfonyl)-anilin, 5-(Benzylsulfonyl)-2-methoxy-anilin, 5-(Ethylsulfonyl)-2-methoxyanilin,

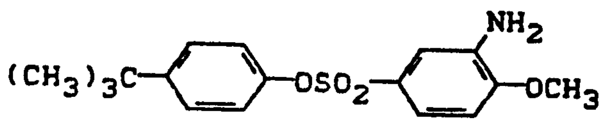 ,

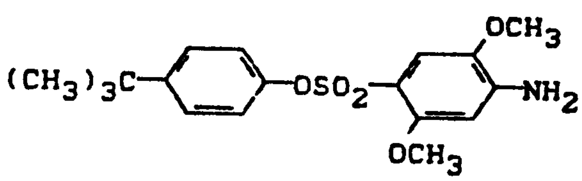 .

Für den Fall, daß m in Formel I > 0 ist, d.h. die Diazokomponente 1-4 Hydroxygruppen aufweist, steht D vorzugsweise für einen Phenylrest, der durch Hydroxy-$C_1$-$C_8$-alkoxy, $-NO_2$, -CN, F, Cl, Br, $C_1$-$C_4$-Alkyl substituiert sein kann, oder durch einen Rest der Formeln

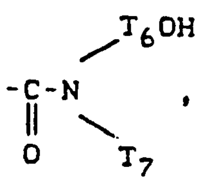 , 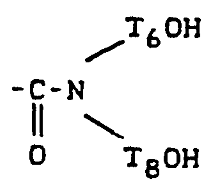 , 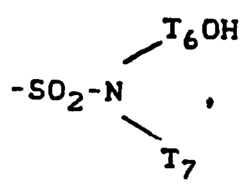 , 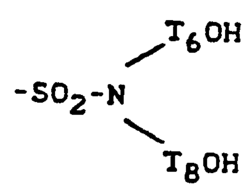

substituiert ist, wobei

$T_6$, $T_8$ einen aliphatischen Rest, der durch ein oder mehrere Sauerstoffatome unterbrochen sein kann und

$T_7$ Wasserstoff, einen aliphatischen oder araliphatischen Rest, die durch ein oder mehrere Sauerstoffatome unterbrochen sein können, bezeichnen; der Phenylrest

D kann 1-3, vorzugsweise 1 oder 2 weitere Substituenten aus der oben genannten Reihe aufweisen.

Alkyl ($T_1$, $T_4$) bezeichnen vorzugsweise $C_1$-$C_6$-Alkyl, insbesondere Methyl und Ethyl. Aryl ($T_1$) steht vorzugsweise für Phenyl oder Naphthyl.

Ist n = 0, so stehen $T_3$, $T_5$ vorzugsweise für $C_1$-$C_{22}$-Alkyl, $C_2$-$C_{22}$-Alkenyl, $C_3$-$C_7$-Cycloalkyl, Benzyl, Phenethyl, $C_2$-$C_{18}$-Alkoxyalkyl, Phenoxy-$C_1$-$C_{22}$-alkyl, Phenoxy-$C_2$-$C_{18}$-alkoxyalkyl.

Geeignete Reste $T_3$ oder $T_5$ sind z.B. Methyl, Ethyl, Phenoxy-$C_1$-$C_{22}$-alkyl, Phenoxy-$C_2$-$C_{18}$-alkoxyalkyl, n- und i-Propyl, Alkyl, n- und i-Butyl, n- und i-Pentyl, $-CH_2C(CH_3)_3$, n-Hexyl, Cyclohexyl, n-Octyl, 2-Ethylhexyl, Decyl, Dodecyl, Palmityl, Stearyl, Oleyl; $-CH_2CH_2OCH_3$, $-CH_2CH_2-OC_2H_5$, $-CH_2CH_2CH_2O(CH_2)_3CH_3$,

$-CH_2CH_2CH_2OCH_2CH(CH_2)_3CH_3$, $-CH_2CH_2CH_2O(CH_2)_{11}CH_3$,
$\quad\quad\quad\quad\quad\quad\;\; |$
$\quad\quad\quad\quad\quad\quad C_2H_5$

$-CH_2CH_2OCH_2CH_2OCH_3$, $-CH_2CH_2CH_2OCH_2CH_2O(CH_2)_3CH_3$,

$-CH_2CH_2O$ 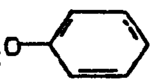 , $-CH_2CH_2CH_2OCH_2CH_2O$ 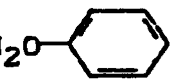 ,

$-CH_2CH_2CH_2-O$ 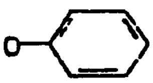 .

Ist n > 0, so stehen $T_3$, $T_5$ vorzugsweise für einen $C_2$-$C_{18}$-Alkylrest, der durch 1-6 O-Atome unterbrochen sein kann; Beispiele für entsprechende Hydroxyalkylreste sind:
$-CH_2CH_2OH$, $-CH_2CH_2CH_2OH$, $-CH_2CH(OH)CH_3$, $-CH_2CH(OH)CH_2CH_3$, $-CH_2CH_2CH(OH)CH_3$, $-CH_2CH_2CH_2CH_2OH$, $-CH_2CH_2OCH_2CH_2OH$, $-CH_2CH_2(OH_2CH_2)pOH$, (p = 1-5), $-CH_2CH_2CH_2OCH_2CH_2OH$, $-CH_2CH_2CH_2(OCH_2CH_2)_qOH$, (q = 1 - 3) $-CH_2CH_2H_2O(CH_2)_4OH$, $-CH_2CH_2CH_2O(CH_2)_6OH$, $-CH_2CH_2CH_2OCH_2CH_2CH(CH_3)CH_2CH_2OH$, $-CH_2CH(OH)CH_2OH$, $-CH-CH_2OH$, $-C-(CH_2OH)_2$.
$\quad\quad\quad\quad\quad\quad\quad\quad\quad\quad\quad\;\; |\quad\quad\quad\quad\quad\;\; |$
$\quad\quad\quad\quad\quad\quad\quad\quad\quad\quad\quad CH_3\quad\quad\quad\; CH_3$

Die Pyridonazofarbstoffe mit 1-4 Carboxylgruppen entsprechen vorzugsweise der Formel

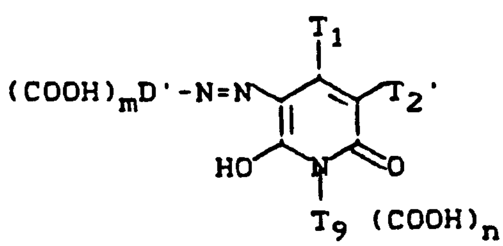

(II)

in der

m, n und $T_1$ die zu Formel I angegebenen Bedeutungen haben,

$T_2$' H, -CN, $-COOT_4$, mit der zu Formel I angegebenen Bedeutung für $T_4$,

$T_9$ einen aliphatischen oder araliphatischen Rest, die durch ein oder mehrere Sauerstoffatome unterbrochen sein können, und

D' den Rest einer Diazokomponente bezeichnen.

Für den Fall, daß n = O ist, steht $T_9$ vorzugsweise für $C_1$-$C_{22}$-Alkyl, $C_2$-$C_{22}$-Alkenyl, $C_3$-$C_7$-Cycloalkyl, Benzyl, Phenethyl, $C_2$-$C_{18}$-Alkoxyalkyl, Phenoxy-$C_1$-$C_{22}$-alkyl, Phenoxy-$C_2$-$C_{18}$-alkoxyalkyl. Geeignete Reste $T_9$ sind z.B. Methyl, Ethyl, n- und i-Propyl, Allyl, n- und i-Butyl, n- und i-Pentyl, $-CH_2C(CH_3)_3$, n-Hexyl, Cyclohexyl, n-Octyl, 2-Ethylhexyl, Decyl, Dodecyl, Palmityl, Stearyl, Oleyl, $-CH_2CH_2OCH_3$, $-CH_2CH_2OC_2H_5$, $-CH_2CH_2CH_2O(CH_2)_3CH_3$,

$-CH_2CH_2CH_2OCH_2CH(C_2H_5)(CH_2)_3CH_3$, $-CH_2CH_2CH_2O(CH_2)_{11}CH_3$,

$-CH_2CH_2OCH_2CH_2OCH_3$, $-CH_2CH_2CH_2OCH_2CH_2O(CH_2)_3CH_3$,

$-CH_2CH_2O-$ 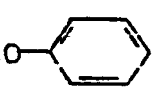 , $-CH_2CH_2CH_2OCH_2CH_2O-$ 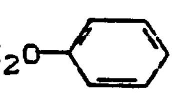 ,

$-CH_2CH_2CH_2-O-$ 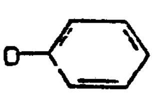 .

Für den Fall, daß n > 0 ist, steht $T_9$ vorzugsweise für einen $C_1$-$C_{12}$-Alkylrest. Beispiele für entsprechende Reste $-T_9(COOH)_n$ sind: $-CH_2COOH$, $-CH_2CH_2COOH$, $-CH(CH_3)COOH$, $-(CH_2)_5COOH$, $-(CH_2)_{10}COOH$, $-(CH_2)_{11}-COOH$, $HOOCCH_2CHCOOH$.

D' hat vorzugsweise die für D genannten Bedeutungen. Für den Fall, daß m in Formel II > 0 ist, d.h. die Diazokomponente 1-4 Carboxylgruppen aufweist, können diese Carboxylgruppen direkt oder über Zwischenglieder an den Phenylring gebunden sein.

Beispiele für Diazokomponenten mit unmittelbar gebundener Carboxylgruppe sind: 2-, 3- oder 4-Aminobenzoesäure, 4-Chlor-, 4-Methoxy- oder 4-Methyl-3-amino-benzoesäure, 3-oder 4-Aminophthalsäure, 5-Aminoisophthalsäure, 2-Aminoterephthalsäure.

Als Zwischenglieder kommen z.B. $C_1$-$C_6$-Alkyliden oder $-O-(C_1$-$C_6$-Alkyliden)-Gruppen in Frage; Beispiele für entsprechende Diazokomponenten sind:

2-, 3- oder 4-Aminophenoxyessigsäure, 2-, 3- oder 4-Aminophenoxypropionsäure, 2-, 3- oder 4-Aminophenylessigsäure bzw. die Derivate der genannten Säuren, die durch 1 oder 2 Substituenten aus der Reihe $C_1$-$C_4$-Alkyl, Halogen wie Cl, Br, F, -CN, $-NO_2$ substituiert sind.

Für die Umsetzung mit den Farbstoffen der Formel I vorzugsweise geeignete Di- oder Polycarbonsäuren sind Oxalsäure oder Carbonsäuren der Formel

$$\left[\ G'\ \right]\!-\!(COOH)_a \qquad (III)$$

in der

G' einen aliphatischen oder aromatischen Kohlenwasserstoffrest mit 1-51 C-Atomen bezeichnet und

a' 2, 3 oder 4 bezeichnet, sowie Carbonsäuren der Formel

$$\left[\ G''\ \right]\!-\!(-OCH_2CH_2\text{-}COOH)_a, \qquad (IV)$$

in der

G" einen vorzugsweise gesättigten Kohlenwasserstoffrest mit 2 bis 51 C-Atomen, bei dem die C-Kette durch 1 - 9, nicht nachbarständige O-Atome unterbrochen sein kann,

a' 2, 3, 4 oder 5 bezeichnen.

Die Verbindungen der Formel IV sind z.B. durch Addition von Acrylnitril an Di- oder Polyole und anschließende Hydrolyse erhältlich.

Beispiele für Carbonsäuren der Formel III sind: Maleinsäure, Fumarsäure, Itaconsäure, Bernsteinsäure, Adipinsäure und bevorzugt höhere Dicarbonsäuren wie Korksäure, Acelainsäure, Sebacinsäure, Dodecandisäure, Dodecenylbernsteinsäure, 1,4-Cyclohexandicarbonsäure, Phthalsäure, Isophthalsäure, Terephthalsäure, Hexahydrophthalsäure, Tetrahydrophthalsäure, 4-Methylhexahydrophthalsäure, Trimesinsäure, Pyromellitsäure.

Beispiele für Carbonsäuren der Formel IV sind:

$HOOCCH_2CH_2OCH_2CH_2OCH_2CH_2COOH$,

$HOOCCH_2CH_2OCH_2CH_2CH_2OCH_2CH_2COOH$

$HOOCCH_2CH_2O-CH_2-CH-O-CH_2CH_2COOH$,
|
$CH_3$

$HOOCCH_2CH_2O-CH_2-CH-O-CH_2CH_2COOH$,
|
$CH_2-CH_3$

$HOOCCH_2CH_2O-CH_2-CH_2-CH-O-CH_2CH_2COOH$,
|
$CH_3$

$HOOCCH_2CH_2O-(CH_2)_4-O-CH_2CH_2COOH$

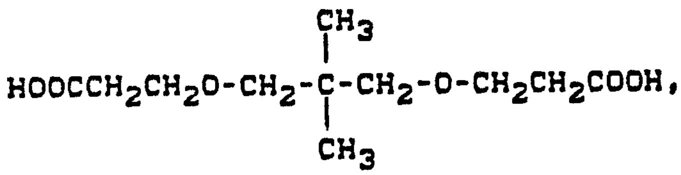

$HOOCCH_2CH_2O-(CH_2)_6-OCH_2CH_2COOH$,

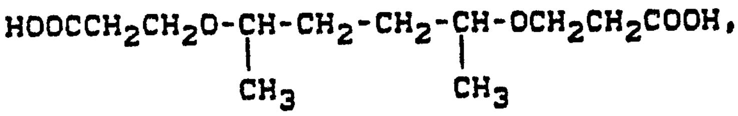

$HOOCCH_2CH_2OCH_2CH_2OCH_2CH_2OCH_2CH_2COOH$,
$HOOCCH_2CH_2OCH_2CH_2CH_2OCH_2CH_2OCH_2CH_2OCH_2CH_2COOH$,
$HOOCCH_2CH_2OCH_2CH_2OCH_2CH_2OCH_2CH_2OCH_2CH_2OCH_2CH_2COOH$.

Ganz besonders bevorzugt werden zur Umsetzung mit den Farbstoffen der Formel I jedoch die durch Oligomerisierung von Fettsäuren herstellbaren Dimer- oder Trimersäuren eingesetzt.

Für die Umsetzung mit den Farbstoffen der Formel II vorzugsweise geeignete Di- oder Polyhydroxyverbindungen entsprechen der Formel

$$\left[ G_1 \right] \!\!-\! (OH)_{a_1} \qquad (V)$$

in der

$G_1$ einen aliphatischen Kohlenwasserstoffrest mit 2-20 C-Atomen und

$a_1$ 2, 3, 4 oder 5 bezeichnet.

Beispiele für Verbindungen der Formel V sind: 1,2-, 1,3- und 1,4-Butandiol, Neopentylglykol, 1,6- und 2,5-Hexandiol, 3-Methyl-1,5-pentandiol, 2-Methyl-2-propyl-1,3-propandiol, Octandiole (z.B. technische Gemische), Trimethyl-1,6-hexandiol (z.B. Gemische), 1,12-Octadecandiol, Glycerin, 1,1,1-Trimethylolethan, 1,1,1-Trimethylolpropan, Ethylenglykol, Propylenglykol, 1,4-Cyclohexandiol, 1,4-Cyclohexandimethanol, 2,2-Bis- (4-hydroxycyclohexyl)-propan, Bis-(hydroxymethyl)-tricyclodecan ("TCD-Diol").

Auch können die Umsetzungsprodukte der Verbindungen der Formel V mit Ethylen- oder Propylenoxid eingesetzt werden.

Weitere bevorzugte Hydroxyverbindungen sind Di- oder Polyglykole mit 3 - 20 Ethylenoxideinheiten, Di- oder Polypropylenglykole mit 3 - 20 Propylenoxideinheiten sowie Mischpolymerisate aus Ethylen- und Propylenoxid sowie 1,4-Bis-(2-hydroxyethoxy)-benzol, 4,4'-Bis-(2-hydroxyethoxy)-diphenylsulfon, 2,2-Bis-[4-(2-hydroxyethoxy)-phenyl]-propan, 1,5-, 2,6-, 2,7- und 1,7-Bis-(2-hydroxyethoxy)-naphthalin.

Verestert man hydroxygruppenhaltige Pyridonazofarbstoffe der Formel I, so kann man zusätzlich Di- oder Polyhydroxyverbindungen z.B. der vorstehend beschriebenen Art zusetzen, wobei man zweckmäßigerweise die Menge an Di- oder Polycarbonsäure in einen äquivalenten Umfange erhöht. Ein derartiges Verfahren führt zu einer Kettenverlängerung, wodurch anwendungstechnische Eigenschaften der Produkte z.B. Löslichkeit und Durchschlagverhalten verbessert werden können.

In analoger Weise kann man verfahren, wenn carboxylgruppenhaltige Pyridonazofarbstoffe der Formel II mit Di- oder Polyhydroxyverbindungen verestert werden, wobei man Di- oder Polycarbonsäuren der vorstehend beschriebenen Art zusetzt.

Sind in den bereits verknüpften Pyridonazofarbstoffen noch überschüssige Carboxylgruppen oder aliphatische Hydroxygruppen vorhanden, so können diese auch mit den in den vorangegangenen Abschnitten genannten Di- oder Polyolen oder Di- oder Polycarbonsäuren verestert werden, wodurch die Pyridonazofarbstoffe gegebenenfalls weiter verknüpft werden. Auch können überschüssige Carboxyl- oder Hydroxygruppen der bereits esterartig verknüpften Pyridonazofarbstoffe durch monofunktionelle Alkohole oder monofunktionelle Carbonsäuren wie gesättigte oder ungesättigte $C_{10}$-$C_{22}$-Fettalkohole, $C_{10}$-$C_{22}$-Fettsäuren oder Umsetzungsprodukte von Fettalkoholen mit Ethylen- oder Propylen-oxid wie sie z.B. auch als Emulgatoren und Dispergiermittel Verwendung finden, weiter verestert werden.

Bei allen genannten Veresterungen können Verbindungen zugesetzt werden, die sowohl eine Carboxyl- als auch eine aliphatische Hydroxygruppe enthalten. Diese führen zwar zu keiner Verknüpfung, verlängern jedoch die Kette und können damit z.B. die Löslichkeit verbessern. Solche Hydroxycarbonsäuren sind z.B. Glykolsäure, Milchsäure, 3-Hydroxypropansäure, 6-Hydroxycapronsäure, Ricinolsäure, Hydroxystearinsäure, 4-(2-Hydroxyethoxy)-benzoesäure oder gegebenenfalls die Lactone, Oligomere oder Polymere dieser Verbindungen.

Die genannten Veresterungsreaktionen können selbstverständlich auch vor der Kupplung an den einzelnen Komponenten erfolgen.

Bei den Veresterungen werden die zu veresternden Hydroxy- und Carboxygruppen-haltigen Komponenten im einfachsten Fall in äquivalenten Mengen eingesetzt. Man kann jedoch auch eine oder mehrere der Komponenten im Überschuß einsetzen.

Dies kann aus mehreren Gründen günstig sein:

So kann z.B. dadurch die Veresterung beschleunigt werden. Unter Umständen kann damit auch erreicht werden, daß die Veresterung bezüglich einer der Komponenten möglich quantitativ erfolgt. Das ist z.B. dann wichtig, wenn die eingesetzten hydroxy- oder carboxygruppenhaltigen Pyridonazofarbstoffe selbst noch schwerer löslich sind und erst durch Veresterung in besser lösliche Verbindungen überführt werden. Die im Überschuß eingesetzten Komponenten können auch einen Kettenabbruch bewirken und so das Molekulargewicht der Verbindungen begrenzen. Dies kann dann wichtig sein, wenn bei der Veresterung von äquivalenten Mengen an carboxy- und hydroxygruppenhaltigen Komponenten Verbindungen mit einem höheren Molekulargewicht und damit eventuell einer zu hohen Viskosität entstehen.

Die Veresterung selbst kann auf übliche Weise durchgeführt werden, wie es z.B. in Houben-Weyl, Methoden der organischen Chemie, 4. Aufl. Band VIII, S. 516ff, Georg Thieme Verlag, Stuttgart 1952 beschrieben wird. So können z.B. die Komponenten in einem geeigneten Lösungsmittel in Gegenwart eines sauren Katalysators erhitzt und das dabei entstehende Wasser azeotrop entfernt werden. Saure Katalysatoren sind beispielsweise: Schwefelsäure, Salzsäure, Chlorsulfonsäure, Phosphorsäure, Methan-, Ethan- und Butansulfonsäure, Benzol-, Toluol- und Dodecylbenzolsulfonsäure, Naphthalin-1- und -2-sulfonsäure und saure Austauscher.

Man kann die Ester auch durch Umesterung herstellen. In diesem Fall geht man von Estern der hydroxy- und carboxygruppenhaltigen Komponenten mit niederen Fettsäuren und niederen Alkoholen aus, estert in bekannter Weise in Gegenwart eines Katalysators um, wobei man die niederen Fettsäuren und Alkohole gleichzeitig durch Abdestillieren aus dem Gleichgewicht entfernt.

Es ist auch möglich, die Ester ausgehend von aktivierten Derivaten der Carbonsäuren herzustellen, beispielsweise

ausgehend von Carbonsäurechloriden und Anhydriden. Besonders geeignet hierfür sind cyclische Anhydride wie z.B. Maleinsäureanhydrid, Bernsteinsäureanhydrid, Glutarsäureanhydrid, Phthalsäureanhydrid, Hexahydrophthalsäureanhydrid, 4-Methylhexahydrophthalsäureanhydrid, Tetrahydrophthalsäureanhydrid, Dodecenylbernsteinsäureanhydrid. Die Verwendung dieser Anhydride ist vor allem dann günstig, wenn man von einem weniger löslichen hydroxygruppenhaltigen Pyridonazofarbstoff ausgeht. Man kann dann zunächst den Pyridonazofarbstoff mit einem der genannten Anhydride umsetzen, wobei in der Regel besser lösliche Produkte entstehen, die leichter weiter verestert werden können.

Weitere verknüpfte Pyridonazofarbstoffe, die erfindungsgemäß verwendet werden können, entsprechen in einer ihrer tautomeren Formeln der Formel

$$[\,Py_1\,]\text{-N=N-L-N=N-}[\,Py_2\,] \qquad \text{VI}$$

in der

$[\,Py_1\,]$, $[\,Py_2\,]$ Pyrydonreste bezeichnen, die in einer ihrer tautomeren Formen der Formeln

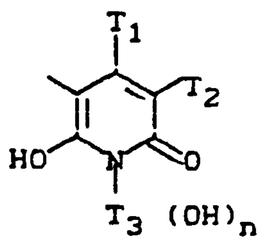

und

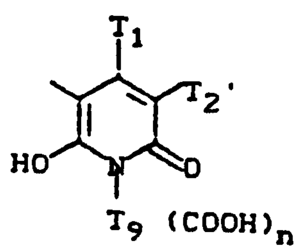

entsprechen, in denen

$T_1$, $T_2$, $T_3$, $T_2'$, $T_9$ und n die zu den Formeln I und II angegebenen Bedeutungen haben, und

L für einen gegebenenfalls substituierten Phenylenrest, wie m- oder p-Phenylen, oder einen Rest der Formel

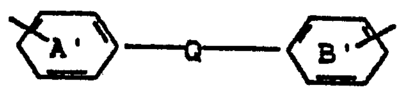

steht, wobei die Ringe A' und B' gegebenenfalls substitüiert sein können und

Q $-O-$, $-S-$, $-SO_2-$, $-\underset{\underset{O}{\|}}{C}-$, $-CH_2-$, $-CH_2CH_2-$, $-\underset{\underset{CH_3}{|}}{\overset{\overset{CH_3}{|}}{C}}-$,

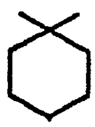, $-O(CH_2)_{n'}-O-$, $-\underset{\underset{O}{\|}}{C}-\underset{\underset{R_{10}}{|}}{N}-Q_1-\underset{\underset{R_{11}}{|}}{N}-\underset{\underset{O}{\|}}{C}-$

$-SO_2-\underset{\underset{R_{10}}{|}}{N}-Q_1-\underset{\underset{R_{11}}{|}}{N}-O_2S$, $-SO_2-O-Q_2-O-SO_2-$ oder

$-O-O_2S-Q_3-SO_2-O-$ bezeichnet, wobei

$R_{10}$, $R_{11}$ Wasserstoff, $C_1$-$C_6$-Alkyl oder $C_3$-$C_7$-Cycloalkyl bedeuten, die z.B. durch -OH oder -CN substituiert sein können und $R_{10}$, $R_{11}$ auch zusammentreten und eine $-(CH_2)_{1-4}$-Brücke bilden können,

$Q_1$ einen gegebenenfalls substituierten Kohlenwasserstoffrest, dessen C-Kette durch ein oder mehrere nicht-nachbarständige O-Atome oder

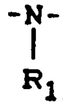Gruppen unterbrochen sein kann,

wobei

$R_{12}$ Wasserstoff oder $C_1$-$C_4$-Alkyl bedeutet, das z.B. durch -OH substituiert sein kann, wobei dieser Rest sich vorzugsweise von einem $C_2$-$C_{20}$-Alkan, einen $C_3$-$C_7$-Cycloalkan, vorzugsweise Cyclohexan, einem Phenyl- oder Naphthyl-$C_1$-$C_6$-alkan, Benzol oder Naphthalin ableitet und $Q_2$, $Q_3$ aromatische Reste und

n' 1, 2, 3, 4, 5 oder 6 bezeichnen.

In bevorzugten Resten 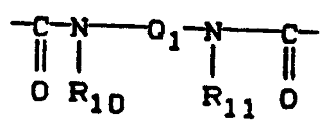 und

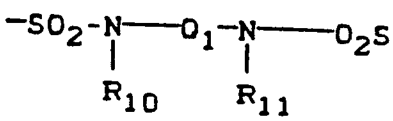 steht 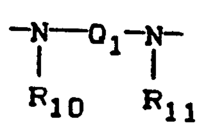 für

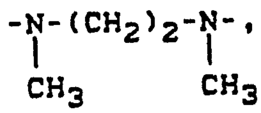, 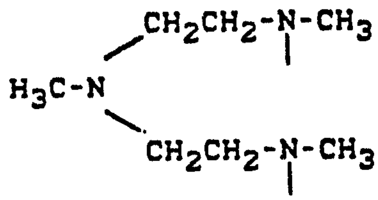,

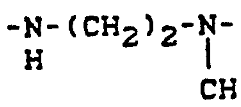, 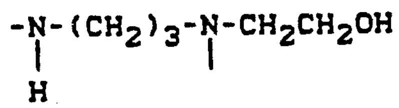,

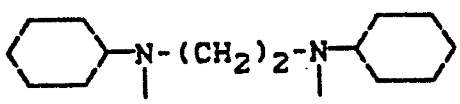, 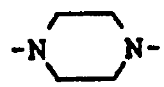,

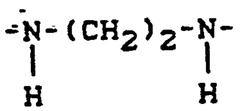, 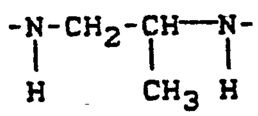, 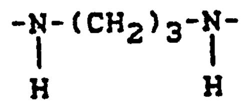

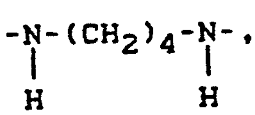, 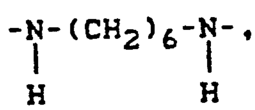, 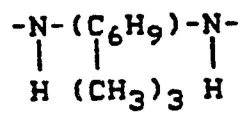 (Gemisch),

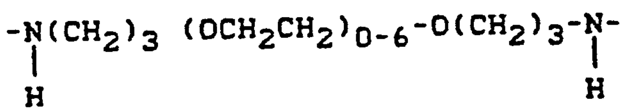

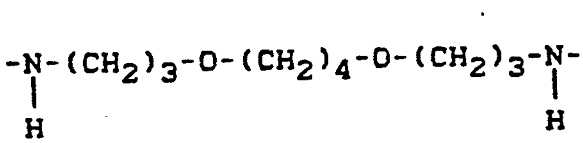 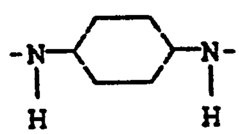,

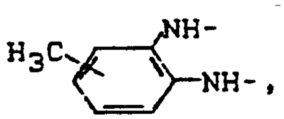, 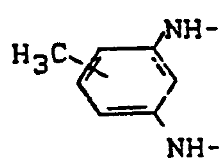, 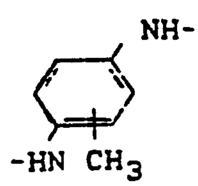,

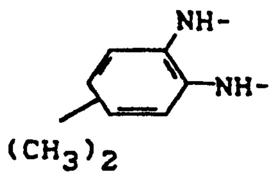,
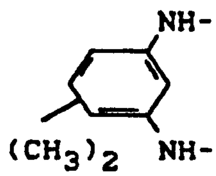,
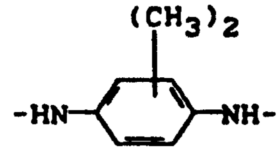,

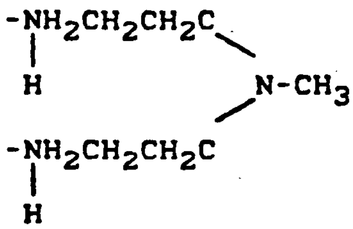,
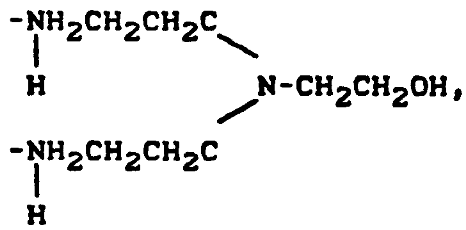,

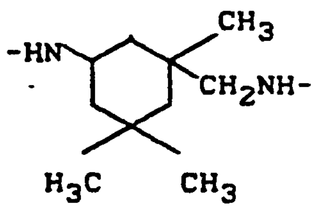,
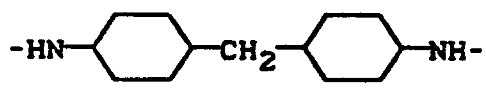,

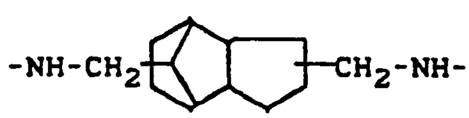,
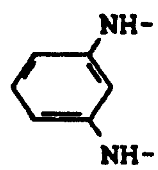,
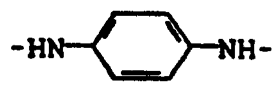

Bevorzugte Reste $Q_2$ sind gegebenenfalls substituierte Phenylen, gegebenenfalls substituierte Naphthylen- oder gegebenenfalls substituierte Reste der Formeln

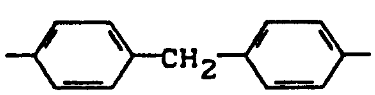,
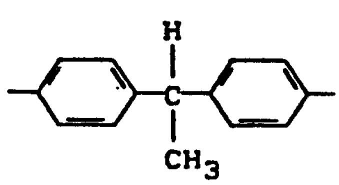,

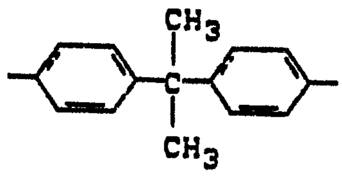 , 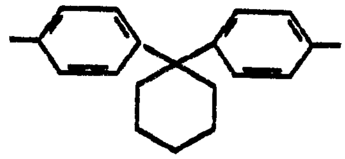 ,

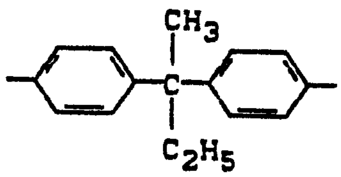 , 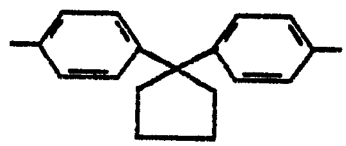 ,

z.B.

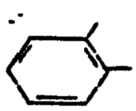 , 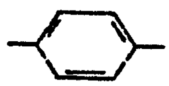 , 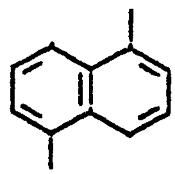 , 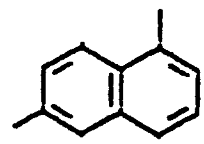 .

Bevorzugte Reste $Q_3$ sind gegebenenfalls substituierte Phenylen- oder gegebenenfalls substituierte Naphthylenreste.

Für $Q_3$ seien beispielhaft aufgeführt:

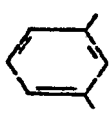 , 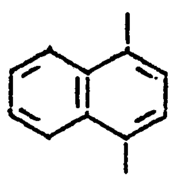 , 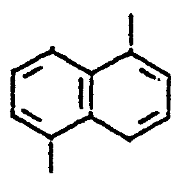 , 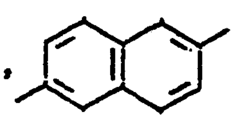

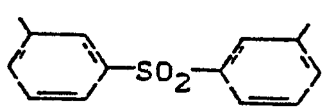 .

Eine weitere bevorzugte Gruppe von erfindungsgemäßen einsetzbaren Verbindungen entspricht der Formel

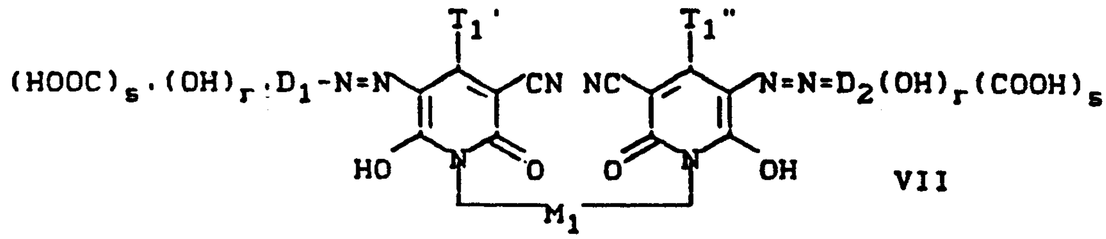

VII

in der

$D_1$, $D_2$ den Rest einer Diazokomponente,

$T_1'$, $T_1''$ Alkyl, Aryl, $-COOT_4'$,

$T_4'$ Wasserstoff, Alkyl,

$M_1$ den Rest eines gegebenenfalls substituierten Kohlenwasserstoffs, dessen C-Kette durch ein oder mehrere nicht-nachbarständige O-Atome oder $-\underset{R_{13}}{\underset{|}{N}}-$-Gruppen unterbrochen sein kann,

$R_{13}$ Wasserstoff oder $C_1$-$C_4$-Alkyl, das z.B. durch -OH substituiert sein kann, und

r, r', s, s' 0, 1 oder 2 bezeichnen.

Bevorzugte Bedeutungen von $D_1$ und $D_2$ entsprechen den vorstehend angegebenen Vorzugsbedeutungen von D.

Zusätzlich seien als bevorzugte Diazokomponenten genannt:

Diazokomponenten, die eine Gruppe $H_2N-X_1-$ enthalten wie 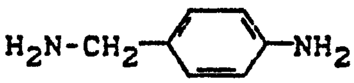 oder solche, die einen Sulfamoyl- oder Carbamoyl-Substituenten wie 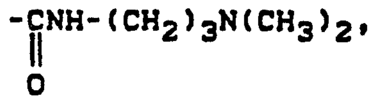,

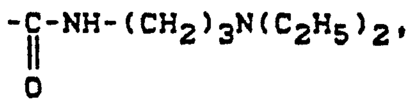, 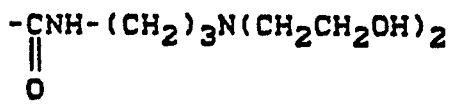,

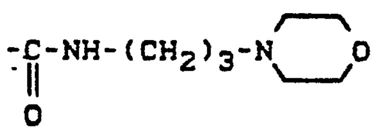, $-SO_2-NH-(CH_2)_3N(CH_3)_2$,

$-SO_2-NH-(CH_2)_3N(C_2H_5)_2$, $-SO_2-NH-(CH_2)_3N(CH_2CH_2OH)_2$,

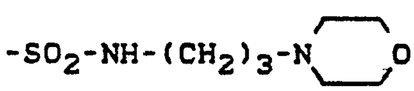 enthalten.

Die Pyridonazofarbstoffe der Formeln VI und VII können, sofern sie freie -OH oder -COOH-Gruppen enthalten, mit Di- oder Polyolen oder di- oder Polycarbonsäuren verestert werden, wodurch der Verknüpfungsgrad erhöht und die Löslichkeit verbessert werden kann.

Die Veresterung kann im Prinzip wie die vorstehend bereits beschriebene Veresterung der Verbindungen der Formeln I und II erfolgen.

Insbesondere können auch die Farbstoffe der Formeln VI und VII, da sie bereits verknüpft sind, durch monofunktionelle Alkohole oder monofunktionelle Carbonsäuren wie gesättigte oder ungesättigte $C_{10}$-$C_{22}$-Fettalkohole, $C_{10}$-$C_{22}$-Fettsäuren oder Umsetzungsprodukte von Fettalkoholen mit Ethylen- oder Propylenoxid verestert werden.

Eine weitere bevorzugte Gruppe von erfindungsgemäßen einsetzbaren Farbstoffen entspricht der Formel

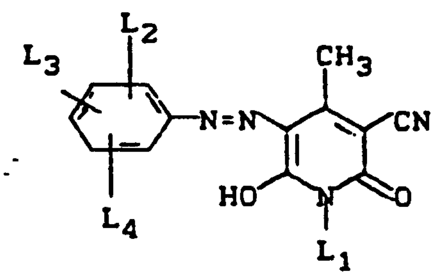

VIII

in der

$L_1$ gegebenenfalls substituiertes $C_{12}$-$C_{22}$-Alkyl, gegebenenfalls substituiertes $C_{12}$-$C_{22}$-Alkenyl, $-L_5-O-L_6$,

$-L_5-O-\underset{\underset{O}{\|}}{C}-L_6$, $-CH_2CH_2O(CH_2CH_2O)_tL_7$,

$-CH_2CH_2O(CH_2CH_2O)_t\underset{\underset{O}{\|}}{C}-L'_7$, $-CH_2CH_2CH_2O(CH_2CH_2O)_tL_7$,

$-CH_2CH_2CH_2O(CH_2CH_2O)_t-\underset{\underset{O}{\|}}{C}-L_7$, $-L_8COOL_9$,

$L_5$ $C_{2-12}$-Alkylen,

$L_6$ $C_2$-$C_{22}$-Alkyl, $C_2$-$C_{22}$-Alkenyl,

$L_7$ Wasserstoff, $C_1$-$C_{22}$-Alkyl, $C_2$-$C_{22}$-Alkenyl, gegebenenfalls substituiertes Phenyl,

$L_8$ $C_1$-$C_{12}$-Alkylen,

$L'_7$ $C_1$-$C_{22}$-Alkyl, $C_2$-$C_{22}$-Alkenyl, gegebenenfalls substituiertes Phenyl,

$L_9$ Wasserstoff, $C_1$-$C_{22}$-Alkyl oder $C_2$-$C_{22}$-Alkenyl,

t 0, 1, 2, 3, 4, 5

$L_2$ Wasserstoff, Halogen wie F, Cl, Br, $C_1$-$C_{12}$-Alkyl, Cylcopentyl, Cyclohexyl, Cyclopentenyl, Cyclohexenyl, Aralkyl, Phenyl-$C_1$-$C_4$-alkyl und Naphthyl-$C_1$-$C_4$-alkyl, $-CF_3$, $-NO_2$, -CN, $C_1$-$C_4$-Alkoxy, $C_1$-$C_4$-Alkoxycarbonyl, Mono- und Di-$C_1$-$C_8$-alkylcarbamoyl, Mono- und Di-$C_1$-$C_8$-alkyl-sulfamoyl,

$L_3$ Wasserstoff, Halogen wie F, Cl, Br, -CN, $C_1$-$C_4$-Alkyl, $C_1$-$C_4$-Alkoxy, $C_1$-$C_4$-Alkoxycarbonyl und

$L_4$ Wasserstoff und $C_1$-$C_4$-Alkyl bezeichnen.

Die $C_{12}$-$C_{22}$-Alkyl- und $C_{12}$-$C_{22}$-Alkenylreste $L_1$ können z.B. durch -OH oder $C_1$-$C_{22}$-Alkoxy oder $C_3$-$C_{22}$-Alkenyloxy substituiert sein.

Bevorzugt enthält $L_1$ in Formel VIII mindestens 12, besonders bevorzugt mindestens 18 C-Atome.

Die Farbstoffe der Formel VIII sind bekannt oder können in Analogie zu literaturbekannten Verfahren hergestellt werden (s.z.B. DE-OS 2 216 207, DE-OS 3 111 648, DE-OS 3 012 863).

Eine wertvolle Eigenschaft der Farbstoffe der Formel VIII ist, daß die Farbtöne im allgemeinen in dem für den Drei- oder Vierfarbendruck gewünschten Bereich liegen.

Folgende Farbstoffe werden besonders bevorzugt eingesetzt:

Farbstoffe, die dadurch erhältlich sind, daß man Farbstoffe der Formel I mit Di- oder Polycarbonsäuren unter esterartiger Verknüpfung von mindestens zwei gleicher oder verschiedener Farbstoffe der Formel V umsetzt.

Farbstoffe, die dadurch erhältlich sind, daß man Farbstoffe der Formel II mit Di- oder Polyhydroxyverbindungen unter esterartiger Verknüpfung von mindestens zwei gleicher oder verschiedener Farbstoffe der Formel II umsetzt.

Farbstoffe der Formel

$$[Py_1]-N=N-L'-N=N-[Py_2] \qquad IX$$

in der

$[Py_1]$, $[Py_2]$ die zu Formel VI angegebenen Bedeutungen haben und

L' für

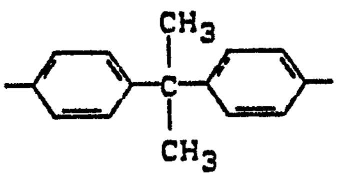 , 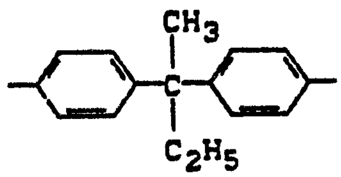 ,

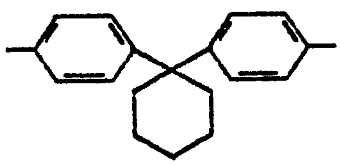 , 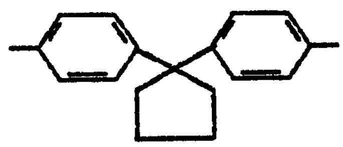 ,

steht, wobei die Phenylen, Cyclopentylen und Cyclohexylenreste z.B. durch $C_1$-$C_4$-Alkyl und die Phenylenreste außerdem durch $-NO_2$ und Cl substituiert sein können.

Die Herstellung der Farbstoffe der Formeln I, II, VI, VII, VIII und IX erfolgt nach oder in Analogie zu literaturbekannten Verfahren (s.z.B. DE-OS 2 216 207, DE-OS 3 111 648, DE-OS 3 012 863, DE-OS 2 152 536, US-PS 4 476 318).

Für den Fall, daß die vorstehend genannten Pyridonazofarbstoffe noch aliphatische Aminogruppen enthalten, können die Farbstoffe zur Erhöhung der Löslichkeit mit geeigneten Säuren zu Salzen umgesetzt werden. Als geeignete Säuren kommen in Frage: Gesättigte oder ungesättigte $C_8$-$C_{22}$-Fettsäuren; Harzsäuren wie Abietinsäure oder deren Umsetzungsprodukte mit Malein- oder Fumarsäure; dimerisierte oder trimerisierte Fettsäuren; $C_{10}$-$C_{20}$-Alkansulfonsäuren, Dodecylbenzolsulfonsäuren, Phosphorsäuremono-

oder -di-ester von Fettalkoholen.

Analog kann man auch solche der vorstehend genannten Pyridonazofarbstoffe, die noch freie Carbonsäuregruppen enthalten, mit Aminen in Salze überführen.

Geeignete Amine sind beispielsweise: Dicyclohexylamin, gesättigte oder ungesättigte $C_{10}$-$C_{22}$-Fettalkylamine oder Difettalkylamine, Fettalkylpropylendiamine, Abietylamine oder die Umsetzungsprodukte diese Amine mit Alkylenoxiden, z.B. Ethylenoxid und Propylenoxid.

Bevorzugte Verwendung bei der Herstellung von Druckfarben finden solche Verbindungen der Formeln I, II, VI, VII, VIII und IX bzw. deren Veresterungsprodukte, bei denen der Massenanteil am Farbstoffmolekül derjenigen Kohlenwasserstoffreste, die nicht unmittelbar an die Azogruppe gebunden sind, wenigstens 20 %, bevorzugt wenigstens 25 %, besonders bevorzugt wenigstens 30 % beträgt.

Die Berechnung zur Auswahl dieser Verbindungen sei an zwei Beispielen erläutert:

α)

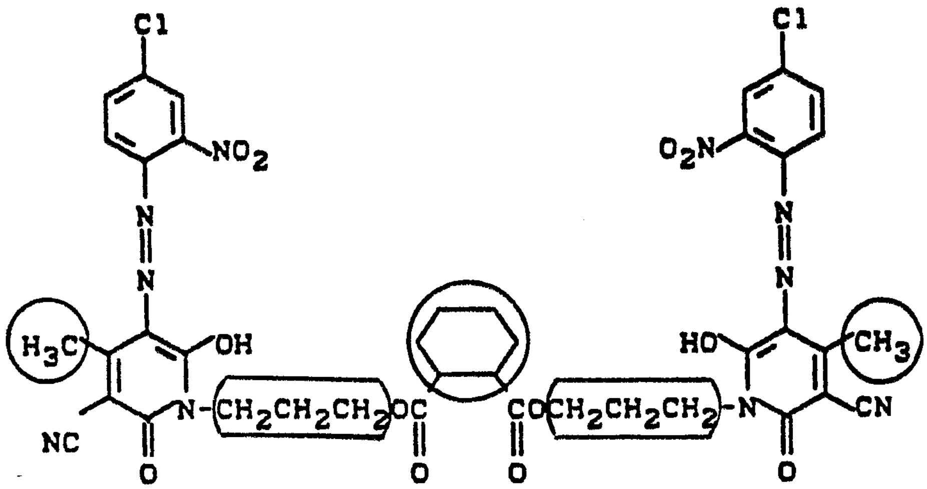

β)

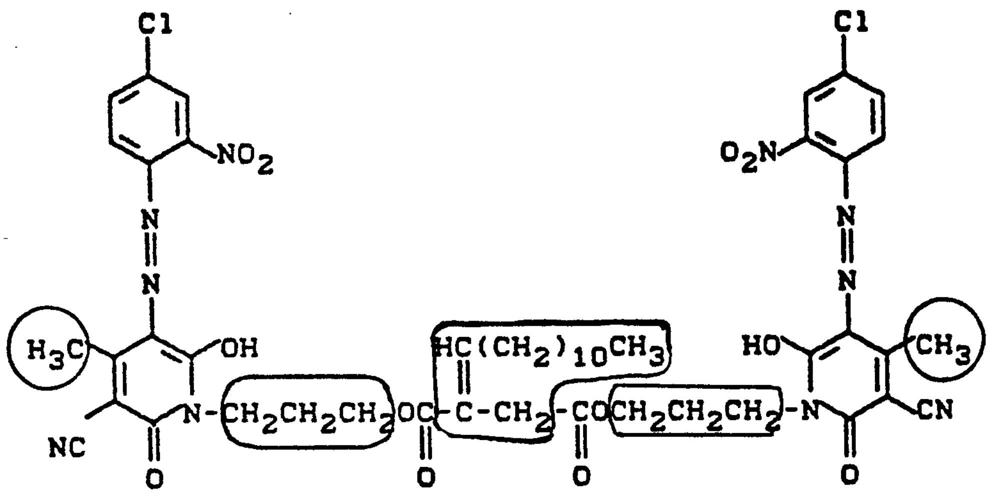

In den Formeln α) und β) wurden die nicht unmittelbar an die Azogruppen gebundenen Kohlenwasserstoffreste markiert.

In Formel α) beträgt der Massenanteil dieser Substituenten an der Gesamtmasse des Moleküls ca. 21,4 % und in Formel β) ca. 32,2 %.

Die ebenfalls in die Druckfarben einsetzbaren Mischungen von Pyridonazofarbstoffen werden oft bereits dadurch erhalten, daß man bei der Herstellung Naturprodukte oder aus Naturprodukten hergestellte Komponenten, die erfahrungsgemäß als Mischungen vorliegen, einsetzt oder aber Komponenten, die als Gemisch von Stereoisomeren vorliegen. Man kann den Mischungsanteil aber auch dadurch erhöhen, daß man fertige Produkte mischt oder bei der Herstellung Mischungen von Komponenten einsetzt, so z.B. Mischungen von Pyridonazofarbstoffen wie sie durch Mischkupplungen entstehen. Diese Mischungen haben den Vorteil, daß sie oft leichter löslich sind als die reinen Komponenten.

B. <u>Phthalocyaninfarbstoffe</u>

Phthalocyaninfarbstoffe der Formel

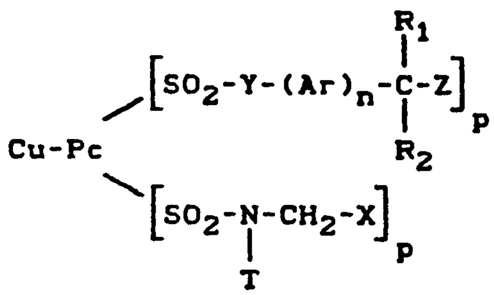

I

in der

Cu-Pc   Kupferphthalocyanin

Y   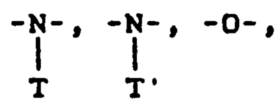

Ar   einen Arylenrest,

Z   für den Fall, daß Y = -O- ist, einen gegebenenfalls substituierten Kohlenwasserstoffrest mit 1 bis 20 C-Atomen und für den Fall, daß Y = 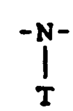

oder $-\underset{\displaystyle T'}{\underset{|}{N}}-$ ist, einen gegebenenfalls substituierten aliphatischen Rest mit 1 bis 20 C-Atomen bezeichnet, wobei die für Z genannten Reste frei von wasserlöslich machenden Gruppen, insbesondere frei von Carboxylat- und Sulfonatgruppen sind und ihre Kohlenstoffkette durch -O-, -O-CO-, -NH-CO-, $-NH-SO_2-$unterbrochen sein kann,

T, T' Wasserstoff, $C_1$-$C_4$-Alkyl, Hydroxy-$C_1$-$C_4$-alkyl,

X einen gegebenenfalls substituierten aliphatischen Rest mit 1 bis 20 C-Atomen, der frei von wasserlöslich machenden Gruppen, insbesondere frei von Carboxylat- und Sulfonatgruppen ist, und dessen Kohlenstoffkette durch -O-, -O-CO-, -NH-CO-, $-NH-SO_2-$ unterbrochen sein kann,

p 2 - 4, vorzugsweise 2 oder 3, bzw. 2 - 3,

n, q 0 - 1 und

$R_1$, $R_2$ Wasserstoff, Methyl, Ethyl bezeichnen, mit der Maßgabe, daß, falls Y für $-\underset{\displaystyle T}{\underset{|}{N}}-$ oder $-\underset{\displaystyle T'}{\underset{|}{N}}-$ steht und n = 0 ist, $R_1 = R_2 = H$ sein müssen.

Ar bezeichnet vorzugsweise einen Phenylenrest. Bei den gegebenenfalls substituierten Kohlenwasserstoffresten Z handelt es sich bevorzugt um Alkyl- wie $C_1$-$C_{20}$- Alkyl-, Alkenyl- wie $C_2$-$C_{20}$-Alkenyl, Cycloalkyl- wie $C_3$-$C_7$-Cycloalkyl, Aryl- wie Phenyl- und Naphthyl-, Aralkyl- wie

Phenyl-$C_1$-$C_4$-alkyl- und Naphthyl-$C_1$-$C_4$- alkyl-Reste. Bei den aliphatischen Resten Z und X handelt es sich bevorzugt um Alkyl- wie $C_1$-$C_{20}$-Alkyl-, Alkenyl- wie $C_2$-$C_{20}$-Alkenyl- und Cycloalkyl- wie $C_3$-$C_7$-Cycloalkyl-Reste.

Die Alkyl-, Alkenyl- und Cycloalkyl-Reste X, Z können beispielsweise durch $C_1$-$C_6$-Alkoxy substituiert sein; die Aryl- und Aralkylreste Z können beispielsweise am aromatischen Ring durch $C_1$-$C_6$-Alkyl, $C_1$-$C_6$-Alkoxy, -OH und Halogen wie F, Cl, Br, substituiert sein.

Vorzugsweise eingesetzt werden folgende Verbindungen:
Verbindungen der Formel:

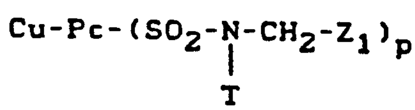

II

in der Cu-Pc, T und p die zu Formel I angegebenen Bedeutungen haben und

$Z_1$ $C_6$-$C_{20}$-Alkyl bezeichnet.

Verbindungen der Formel:

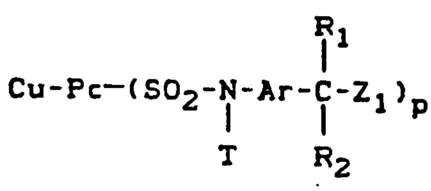

III

in der

Cu-Pc, T, Ar, $R_1$, $R_2$ und p die zu Formel I angegebenen Bedeutungen haben und $Z_1$ $C_6$-$C_{20}$-Alkyl bezeichnet.

Verbindungen der Formel:

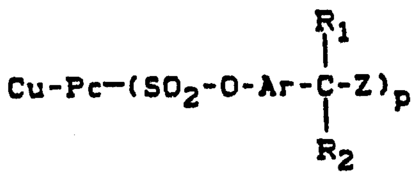

IV

in der

Cu-Pc, Ar, $R_1$, $R_2$, Z und p die zu Formel I angegebenen Bedeutungen haben.

Verbindungen der Formel

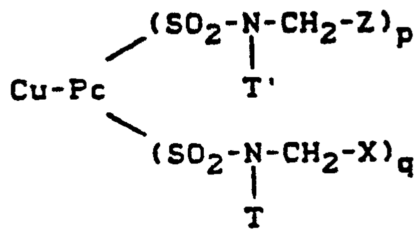

V

in der

Cu-Pc, T, T', X, Z, q und p die zu Formel I angegebenen Bedeutungen haben.

Weitere bevorzugte Verbindungen entsprechen den Formeln:

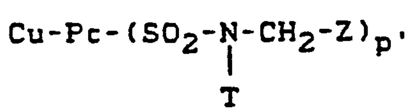

VI

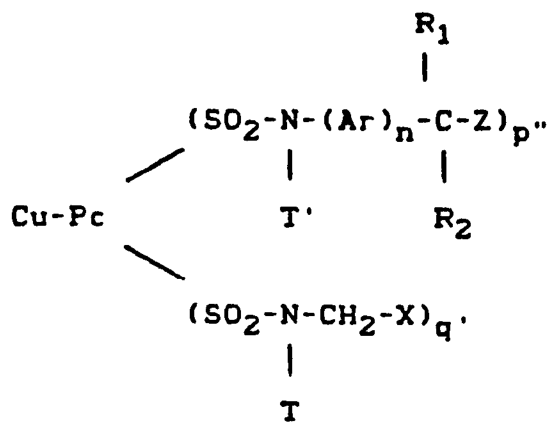

VII

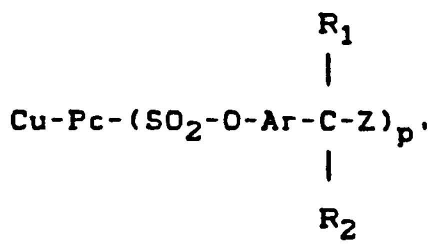

VIII

bei denen

Cu-Pc, T, Ar, n, $R_1$, $R_2$, X und Z die zu Formel I angegebenen Bedeutungen haben und

p' 2 oder 3, bzw. 2 - 3,

p" 2 - 2,8 und

q' 0,2 - 1 bezeichnen.

In den Formeln II - VIII bedeuten $Z_1$ und Z z.B. Hexyl, Heptyl, Octyl, Nonyl, Decyl, Dodecyl, Octadecyl.

Die Herstellung der Farbstoffe der Formel I ist z.B. aus den Patentveröffentlichungen DE-OS 2 025 480, DE-OS 2 224 063, DE-OS 2 244 262, DE-OS 2 301 479, DE-OS 2 434 215, CH 346 573, JP 7 323 665, JP 67 059 586, FR 1 347 550 und FR 1 560 478 bekannt oder die Farbstoffe können in Analogie zu literaturbekannten Verfahren hergestellt werden.

C. Anilinazofarbstoffe

Farbstoffe der Formel

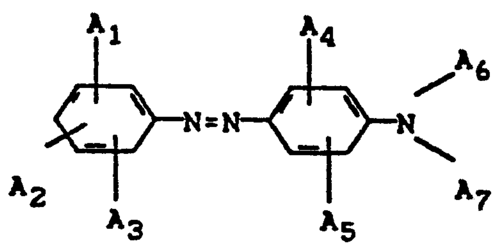

I

in der

$A_1$, $A_2$, $A_3$ Wasserstoff, Halogen wie Cl, Br, F, -CN, $-NO_2$, $C_1$-$C_6$-Alkyl, insbesondere Methyl und Ethyl, Cycloalkyl, insbesondere Cyclopentyl und Cyclohexyl, $C_1$-$C_{18}$-Alkoxy, insbesondere Methoxy und Ethoxy, gegebenenfalls substituiertes Phenoxy, gegebenenfalls substituiertes $C_1$-$C_{18}$-Alkylsulfonyl, gegebenenfalls substituiertes Phenylsulfonyl, gegebenenfalls substituiertes Sulfamoyl, gegebenenfalls substituiertes Carbamoyl, gegebenen-

falls substituiertes Phenylazo, $C_1$-$C_{18}$-Alkoxycarbonyl, $-CF_3$, -SCN, $C_1$-$C_{12}$-Alkylmercapto, $C_1$-$C_6$-Alkylcarbonyl, gegebenenfalls substituiertes Phenylcarbonyl, -OH,

$A_4$, $A_5$ Wasserstoff, Halogen wie Cl, Br, F, gegebenenfalls substituiertes $C_1$-$C_6$- Alkyl, insbesondere Methyl und Ethyl, gegebenenfalls substituiertes $C_1$-$C_6$-Alkoxy, insbesondere Methoxy und Ethoxy,

$-NH-CO-CH_2CH_2OA_8$, $-NH-CO-A_8$, $-NH-CO-O-A_9$,

-NH-CO-A-COOH, -NH-CO-CH——CH-COOH,
```
                       |     |
                      A10   A11
```

$-NH-CO-CH_2OA_8$, $-NH-SO_2-A_8$,

-NH-CO-C = C-COOH,
```
        |   |
       A10 A11
```

-NH-CO-CH - CH - CH-COOH,
```
        |     |     |
       A10   A11   A'10
```

$A_8$ $C_1$-$C_{22}$-Alkyl, $C_2$-$C_{22}$-Alkenyl, $C_3$-$C_7$-Cycloalkyl, insbesondere Cyclopentyl und Cyclohexyl, Phenyl, Naphthyl, Phenyl-$C_1$-$C_4$-alkyl, wobei die genannten Arylreste z.B. durch $C_1$-$C_6$-Alkyl, $C_1$-$C_6$-Alkoxy, Cl, Br, F, $-NO_2$ und Cyclohexyl substituiert sein können,

$A_9$ $C_1$-$C_{22}$-Alkyl, $C_2$-$C_{22}$-Alkenyl, $C_3$-$C_7$-Cycloalkyl, Phenyl-$C_1$-$C_4$-alkyl,

$A_{10}$, $A'_{10}$, $A_{11}$ Wasserstoff, $C_1$-$C_{22}$-Alkyl, $C_2$-$C_{22}$-Alkenyl, vorzugsweise Dodecenyl, wobei für den Fall, daß $A_{10}$ = H, $A_{11} \neq H$ und für den Fall, daß $A_{11}$ = H, $A_{10} \neq H$ ist,

A 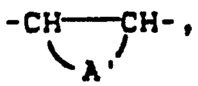 , 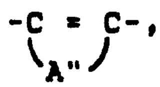 ,

A', A" die restlichen Glieder eines gegebenenfalls durch $C_1$-$C_4$-Alkyl, insbesondere Methyl, Halogen wie Chlor, Brom, -COOH substituierten carbocyclischen 5- oder 6-gliedrigen Rings,

$A_6$ Aryl, vorzugsweise gegebenenfalls substituiertes Phenyl oder $A_7$,

$A_7$ Wasserstoff oder aliphatische Reste, bezeichnen, wobei weiterhin die Reste $A_4$ und $A_6$ auch zu einem, vorzugsweise sechsgliedrigen Ring, z.B. einem Tetrahydrochinolin- oder Benzomorpholin-Ring verbunden sein können und die Reste $A_6$, $A_7$ durch $-(CH_2)_n-$ (n = 4 oder 5) oder $-(CH_2)_2-O-(CH_2)_2-$Gruppen ringgeschlossen sein können.

Die Phenylsulfonyl, Phenoxy, Phenylcarbonyl und Phenylazoreste $A_1$, $A_2$, $A_3$ können z.B. durch $C_1$-$C_6$-Alkyl, $C_1$-$C_6$-Alkoxy, Cl, Br, F und $-NO_2$, Cyclohexyl substituiert sein.

Die $C_1$-$C_{18}$-Alkylsulfonylreste $A_1$, $A_2$, $A_3$ können z.B. durch $C_1$-$C_6$-Alkoxy substituiert sein. Beispielhaft seien $C_1$-$C_6$-Alkoxy-$C_1$-$C_6$-alkylsulfonyl-Reste genannt.

Die Sulfamoyl- und Carbamoylgruppen $A_1$, $A_2$, $A_3$ können z.B. durch einen oder zwei $C_1$-$C_{18}$-Alkylrest(e) substituiert sein, die weiter durch -OH, -CN oder Reste -O-CO-A-COOH,
-O-CO-CH-CH-COOH, -O-CO-C=C-COOH substituiert sein
      |    |                  |  |
      $A_{10}$ $A_{11}$          $A_{10}$ $A_{11}$
können.

Die $C_1$-$C_6$-Alkylreste $A_4$, $A_5$ können z.B. durch -COOH und $C_1$-$C_6$-Alkoxy-carbonyl substituiert sein. Die $C_1$-$C_6$-Alkoxyreste $A_4$, $A_5$ können z.B. durch $C_1$-$C_4$-Alkoxy substituiert sein. Die Phenylreste $A_6$ können z.B. durch $C_1$-$C_6$-Alkyl, $C_1$-$C_6$-Alkoxy, Cyclohexyl, Cl, Br, F und $-NO_2$ substituiert sein.

Bevorzugte Reste A sind:

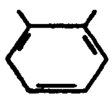 , 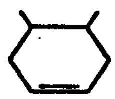 , 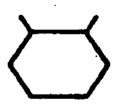 , 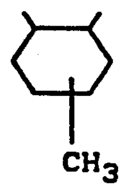 .

Bei den aliphatischen Resten $A_6$, $A_7$ handelt es sich vorzugsweise um gegebenenfalls durch nicht-nachbarständige O-Atome unterbrochene und/oder substituierte $C_1$-$C_{22}$-Alkyl- und $C_2$-$C_{22}$-Alkenylreste oder um $C_3$-$C_7$-Cycloalkylreste. Als Substituenten dieser Alkyl- und Alkenylreste kommen beispielsweise in Betracht:

-OH, -CN, -O-CO-A-COOH, -O-CO-CH——CH-COOH,
                                  |        |
                                 $A_{10}$  $A_{11}$

$-O-CO-\underset{|\atop A_{10}}{C} = \underset{|\atop A_{11}}{C}-COOH$, $-O-CO-A_8$, $-O-COO-A_9$, $-COOA_9$,

$OA_{12}$, wobei

$A$, $A_8$, $A_9$, $A_{10}$ und $A_{11}$ die zu Formel I angegebenen Bedeutungen haben und

$A_{12}$ für $C_3$-$C_7$-Cycloalkyl, insbesondere Cyclopentyl und Cyclohexyl, Phenyl, Naphthyl und Phenyl-$C_1$-$C_4$-alkyl steht.

Bevorzugte Reste $A_6$, $A_7$ sind:

Wasserstoff, gegebenenfalls durch -CN oder -OH substituiertes $C_1$-$C_{22}$-Alkyl, $C_2$-$C_{22}$-Alkenyl, $C_3$-$C_7$-Cycloalkyl,

$-CH_2-\underset{|\atop OA_{13}}{CH}-A_{14}$, $-CH_2CH_2-COOA_9$, $-(CH_2)_n-\underset{|\atop A_{15}}{CH}-O-\underset{|\atop CH_3}{CH}-OA_8$,

$-(CH_2CH_2-O_m-CO-A_8$, $-(CH_2CH_2O)_m-A_{15}$, wobei

$A_{13}$ H, CO-A-COOH, $-CO-\underset{|\atop A_{10}}{CH}-\underset{|\atop A_{11}}{CH}-COOH$, $-CO-\underset{|\atop A_{10}}{C} = \underset{|\atop A_{11}}{C}-COOH$,

$-CO-A_8$, $-COO-A_9$,

$A_{14}$ Wasserstoff, $C_1$-$C_8$-Alkyl, $-CH_2-O-A_8$,

$A_{15}$ Wasserstoff oder $C_1$-$C_8$-Alkyl,

n 1, 2 oder 3 und

m 1, 2, 3, 4, 5, 6, 7, 8, 9 oder 10 bezeichnen und

$A_8$, $A_{10}$, $A_{11}$ und A die zu Formel I angegebenen Bedeutungen haben.

Folgende Verbindungen gemäß Formel I werden bevorzugt eingesetzt:

1. Verbindungen, bei denen

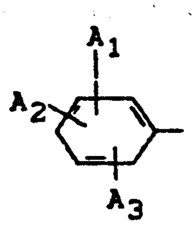 für 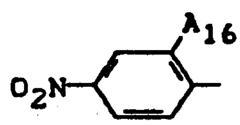 , 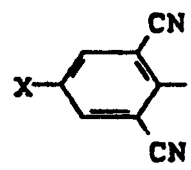 ,

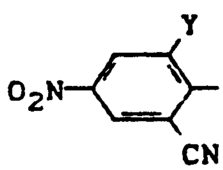 oder 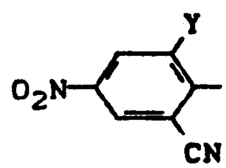

steht, wobei $A_{16}$ Cl, Br, CN, X H, $CH_3$, $C_2H_5$, $C_6H_{12}$, tert.-Butyl, $C_1$-$C_6$-Alkoxy, Cl, Br,
Y $-NO_2$, -CN, $-CF_3$, $C_1$-$C_{12}$-Alkylsulfonyl und
Y' $-NO_2$, -CN bezeichnen.

2. Verbindungen, bei denen

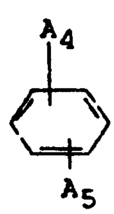 für 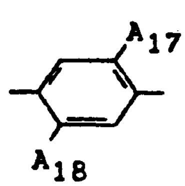

steht, wobei

$A_{17}$ Wasserstoff, Chlor, $C_1$-$C_4$-Alkyl, insbesondere Methyl und Ethyl und $C_1$-$C_4$-Alkoxy, insbesondere Methoxy und Ethoxy bezeichnet,

$A_{18}$ für $-NH-CO-CH_2CH_2OA_8$, $-NH-CO-A_8$, $-NH-CO-O-A_9$, $-NH-COCH_2-OA_8$, $-NH-CO-A-COOH$,

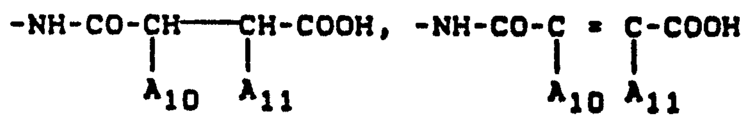 steht

und

$A$, $A_8$, $A_9$, $A_{10}$ und $A_{11}$ die zu Formel I angegebenen Bedeutungen haben.

Somit werden Verbindungen der Formel

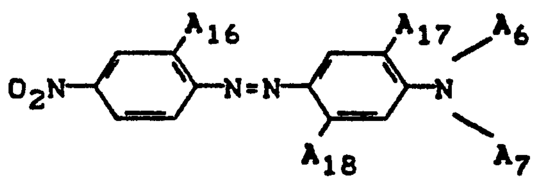 II

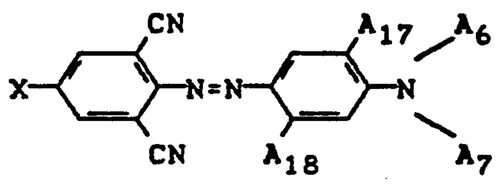 IIa

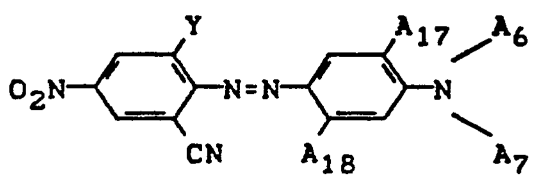 IIb

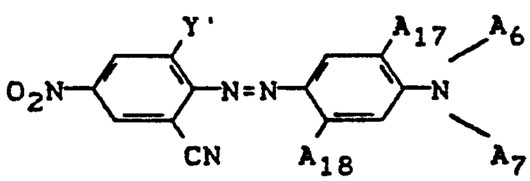 IIc

mit den oben angegebenen Bedeutungen für $A_6$, $A_7$, $A_{16}$, $A_{17}$, X, Y, Y' und $A_{18}$ besonders bevorzugt eingesetzt.

- Besonders bevorzugt stehen

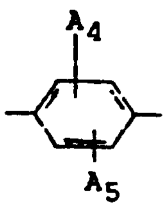 bzw. 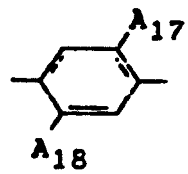 für

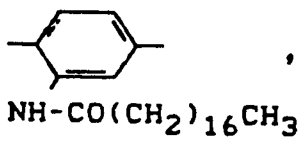 , 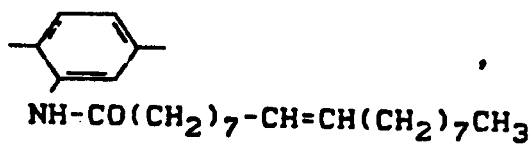 ,

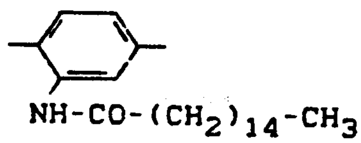 , 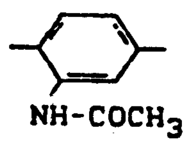 ,

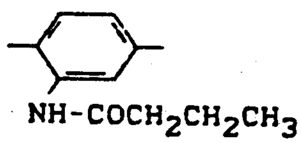 , 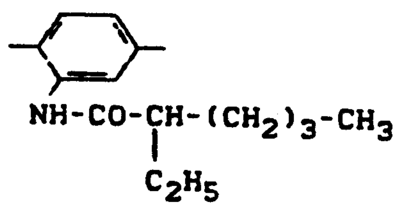 ,

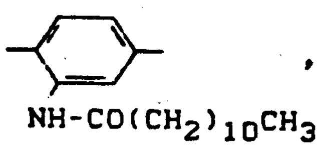 , 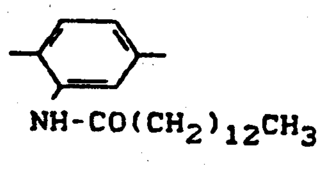 ,

sowie 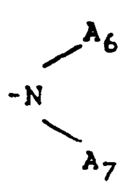 für $-N(C_2H_5)_2$, $-N(C_3H_7)_2$, $-N(CH_3)_2$

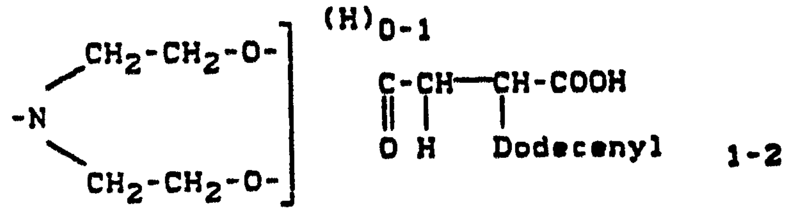

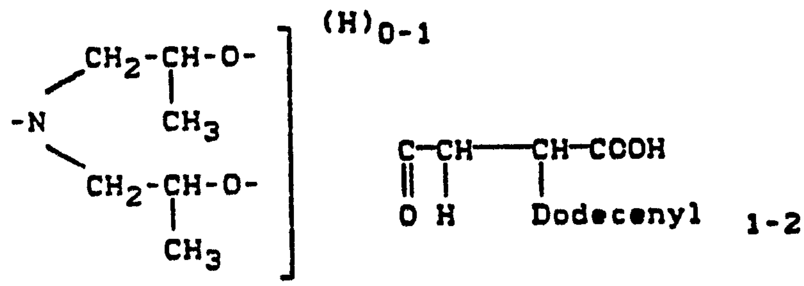

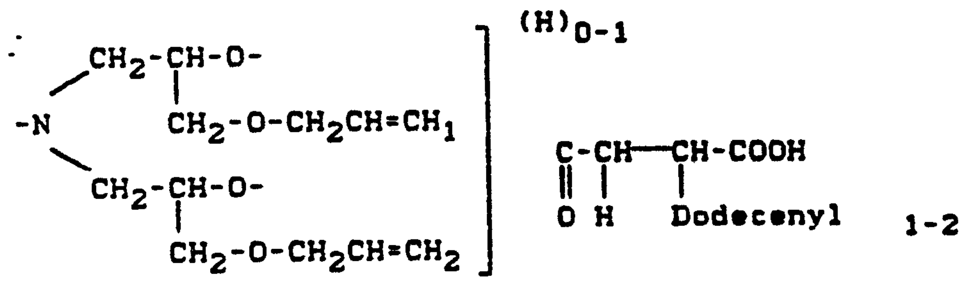

Die letztgenannten Reste werden durch Umsetzung der entsprechenden -OH-Verbindungen mit Dodecenylbernsteinsäureanhydrid eingeführt.

Die Verbindungen der Formel I sind bekannt oder können in Analogie zu literaturbekannten Verfahren hergestellt werden (s.z.B. DE-PS 655 590, EP-A2-73382, CH-PS 567 067, DE-OS 1 544 386, DE-OS 2 815 506, DE-OS 1 544 386, DE-OS 2 129 590, IT 886 176.

Besonders bevorzugt eingesetzt werden Farbstoffe der Formeln:

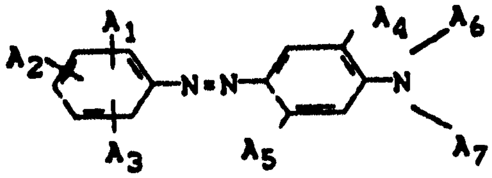

III

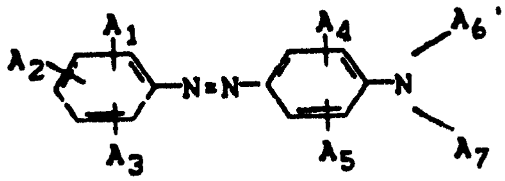

IV

bei denen

$A_5$' für -NH-CO-A-COOH, -NH-CO-CH—CH-COOH,
(| $A_{10}$, | $A_{11}$)

-NH-CO-C = C-COOH und
(| $A_{10}$, | $A_{11}$)

$A_6$' für einen gegebenenfalls durch -O-CO-A-COOH,

-O-CO-CH—CH-COOH, -O-CO-C = C-COOH
(| $A_{10}$, | $A_{11}$)　(| $A_{10}$, | $A_{11}$)

substituierten $C_1$-$C_{22}$-Alkyl- oder $C_2$-$C_{22}$-Alkenylrest oder insbesondere einen Rest

-$CH_2$-CH-$A_{14}$
(| $OA_{13}$')

steht, wobei

$A_{13}$' -CO-A-COOH, -CO-CH—CH-COOH, -CO-C = C-COOH
(| $A_{10}$, | $A_{11}$)　(| $A_{10}$, | $A_{11}$)

bezeichnet, und

$A_1$, $A_2$, $A_3$, $A_4$, $A_5$, $A_6$, $A_7$, A, $A_{10}$, $A_{11}$, $A_{14}$ die oben angegebenen Bedeutungen haben.

Bevorzugte Verwendung bei der Herstellung von Illustrationstiefdruckfarben finden solche Verbindungen der Formel I, bei denen der Massenanteil am Farbstoffmolekül derjenigen Kohlenwasserstoffreste, die nicht unmittelbar an die Azogruppe gebunden sind wenigstens 20 %, besonders bevorzugt wenigstens 25 %, ganz besonders bevorzugt wenigstens 30 % beträgt.

Die Berechnung der Auswahl dieser Verbindungen sei an zwei Beispielen erläutert:

α)

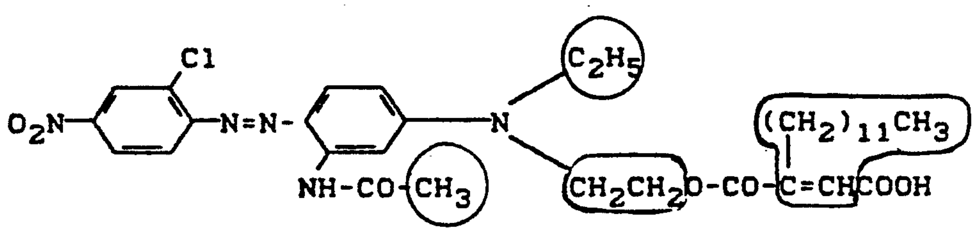

β)

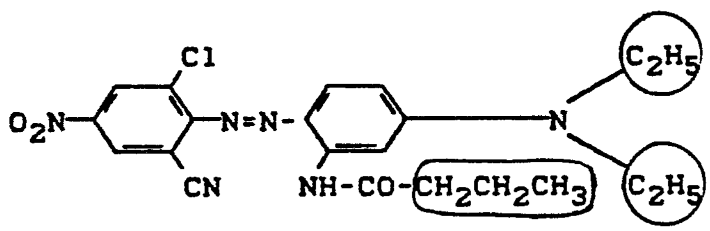

In den Formeln α) und β) wurden die nicht unmittelbar an die Azogruppe gebundenen Kohlenwasserstoffreste markiert.

In Formel α) beträgt der Massenanteil dieser Reste an der Gesamtmasse des Moleküls 39,6 % und in Formel β) 23,8 %.

D. Weitere geeignete Farbstoffe

Weitere besonders geeignete Farbstoffe sind aus Venkataraman, "The Chemistry of Synthetic Dyes", S. 81-125 sowie "Colour Index", 3. Aufl., Band 3, S. 3566-3648, ibid., Band 6, S. 6347-6373 und ibid. Band 7, S. 7233-7251 bekannt.

Von den oben erwähnten aus "Colour Index" bekannten Farbstoffen werden diejenigen bevorzugt eingesetzt, die in wenigstens einem der Lösungsmittel Ethanol, Ethylacetat und insbesondere Toluol bei 20°C zu mindestens 1 Gew.-%, bevorzugt zu mindestens 3 Gew.-%, löslich sind oder als löslich oder sehr löslich bezeichnet werden.

Im einzelnen seien genannt:

Solvent Yellow 14, 16, 19, 29, 30, 32, 33, 34, 40, 42, 46, 47, 48, 56, 65, 70, 72, 74, 76, 79, 81, 82, 83, 86, 87, 89, 93, 96, 98, 107, 124, 144, 148, 149, 150, 151, 152, 153, 157, 139, 140, 141, 143 sowie Dispers Yellow 116, 181, 201 und Basic Yellow 2.

Solvent Orange 5, 7, 12, 21, 23, 29, 30, 43, 45, 48, 51, 61, 62, 70, 75, 81, 82, 91, 92, 96 sowie Dispers Orange 7.

Solvent Red 6, 8, 19, 21, 22, 23, 24, 25, 26, 27, 30, 31, 35, 40, 49, 52, 60, 63, 68, 110, 118, 127, 130, 132, 160, 161, 162, 163, 164, 165, 198, 208 sowie Sudan Rot 7B flüssig.

Solvent Violet 8, 9, 10, 13, 14, 23, 24.

Solvent Blue 5, 36, 38, 44, 49, 50, 51, 53, 59, 65, 70, 78, 97, 98, 129.

Solvent Black 3, 5, 7.

Die Farbstoffe der Formeln:

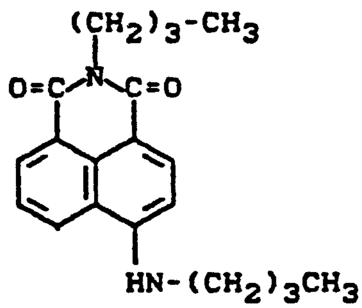

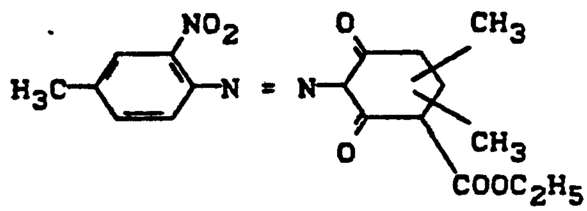

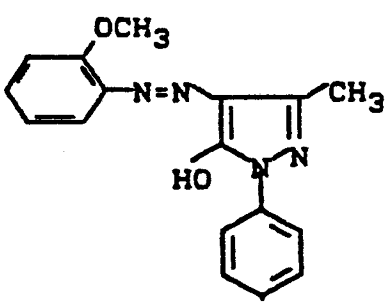

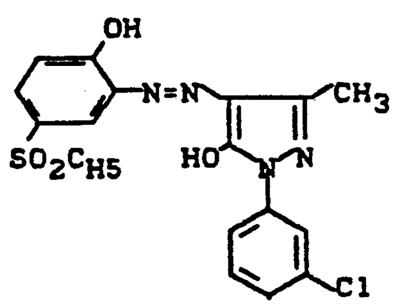

1 : 2 Cr-Komplex

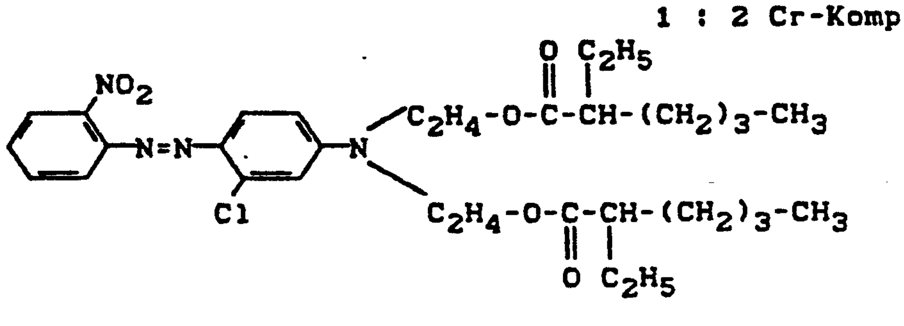

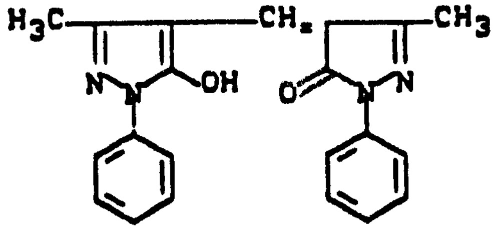

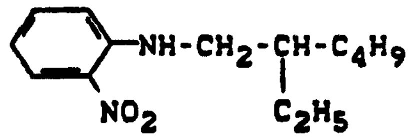

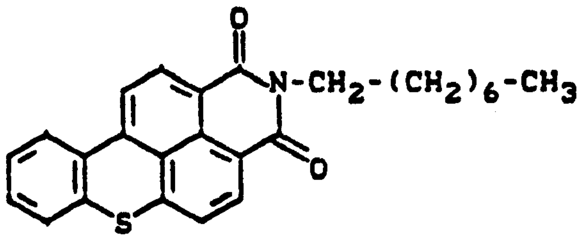

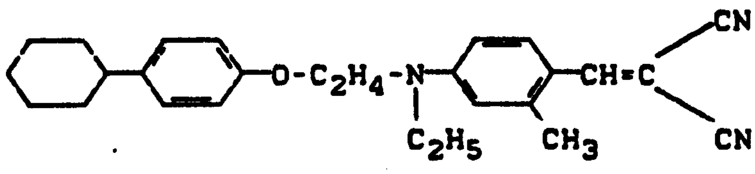

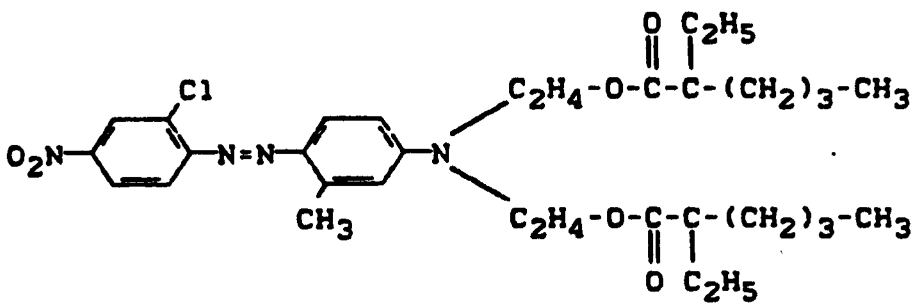

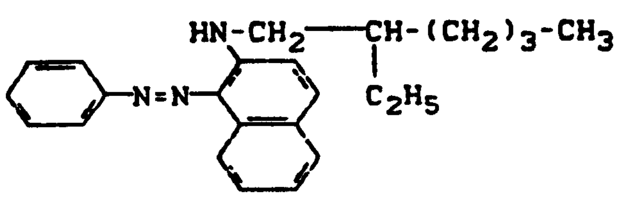

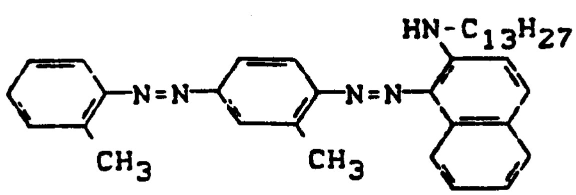

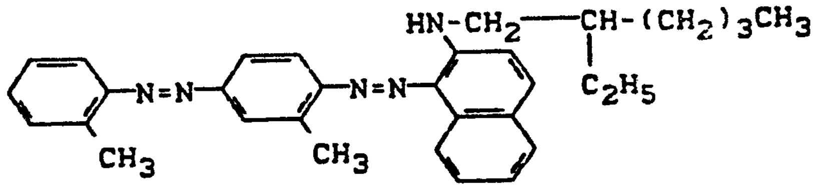

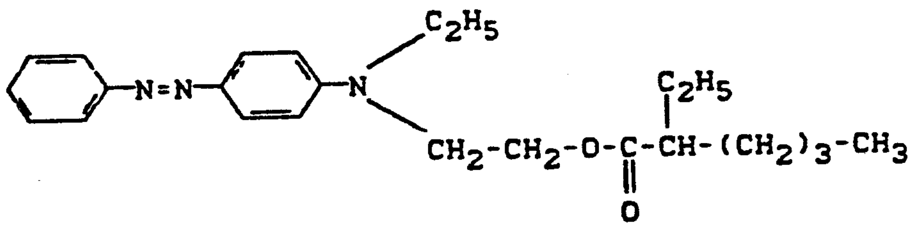

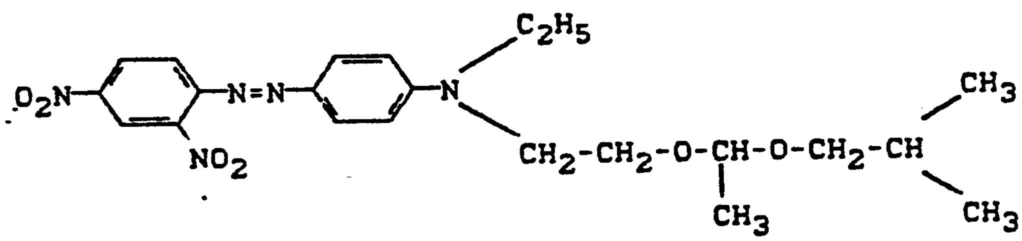

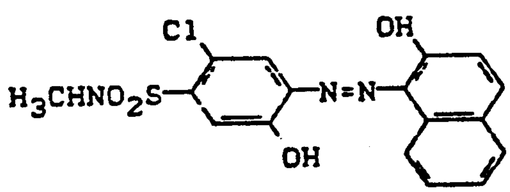

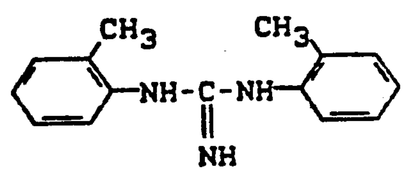

$Cu-Pc-(SO_2-NH-CH_2CH_2-CH_2-N(CH_3)_2)_{ca.\ 2,9}$

Cu-Pc = Kupferphthalocyanin

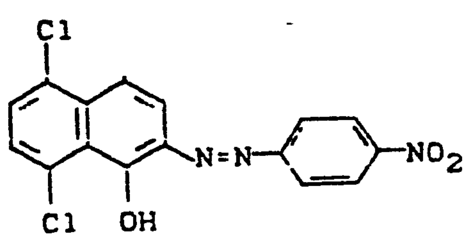

1:2 Co-Komplex

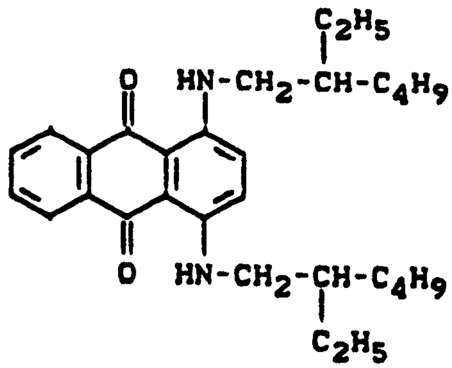

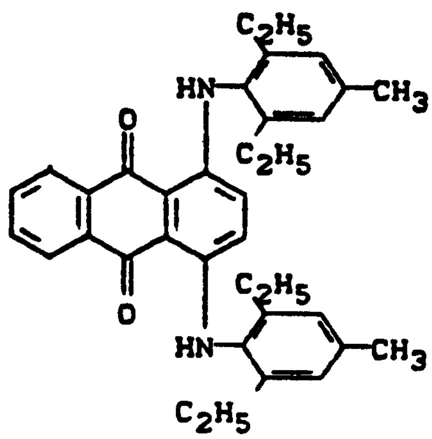

0211325

## A. Beispiele mit Pyridonazofarbstoffen

### Beispiel 1

37,1 g (0,1 Mol) eines auf übliche Weise durch Diazotieren und Kuppeln erhaltenen Farbstoffes der Formel I:

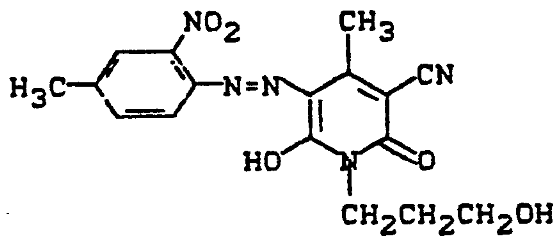

(I)

31,9 g Pripol 1010, einer handelsüblichen, dimerisierten Fettsäure der Firma Unichema mit einer Säurezahl von ca. 195, 200 ml Toluol und 1 g Methansulfonsäure werden 7 Std. unter Rückfluß erhitzt und dabei das bei der Veresterung entstehende Wasser in einem Wasserabscheider abgeschieden. Während der letzten zwei Stunden werden nach und nach insgesamt 100 ml Toluol abdestilliert, wobei die Temperatur bis auf ca. 130°C steigt. Danach ist im Dünnschichtchromatogramm kein unveresterter Farbstoff mehr nachweisbar. Die Lösung wird mit 50 ml Toluol verdünnt, eine geringe Menge eines ungelösten Rückstandes abgesaugt und mit wenig Toluol nachgewaschen. Man erhält 230 g einer klaren gelben Lösung.

18 g dieser Lösung, 51 g einer 50 %igen Lösung in Toluol von Alsynol KZ 71, einem handelsüblichen Kohlenwasserstoffharz der Firma Synres und 36 g Toluol werden gemischt. Die so erhaltene Tiefdruckfarbe besitzt eine Viskosität, die einer Auslaufzeit von 23 Sekunden im DIN 3 Becher nach DIN 53 211 entspricht. Mit dieser Druckfarbe

werden auf einem Durner Tiefdruck Handandruckgerät Tiefdruckpapiere bedruckt, wobei sehr farbstarke gelbe Durcke erhalten werden.

Ein ähnliches Ergebnis erzielt man, wenn man eine Druckfarbe bestehend aus 21,6 g der Farbstofflösung, 49,9 g Toluol und 28,5 g Erkazit 899, einem Calciumresinat der Firma Lackharzwerke Robert Krämer, einsetzt.

Beispiel 2

Man stellt analog in Beispiel 1 eine Druckfarbe her, die aus 18 g der Farbstofflösung nach Beipsiel 1, 50 g einer 50 %igen Lösung von Alsynol KZ 71, 19 g Toluol und zusätzlich 16 g einer 5 %igen Dispersion von Aerosil 380 einer handelsüblichen feindispersen Kieselsäure mit einer spezifischen Oberfläche nach BET von ca. 380 $m^2/g$ (Herst.: Degussa) im Toluol besteht. Man erhält eine Druckfarbe von gleicher Viskosität und mit ähnlichen Eigenschaften wie nach Beispiel 1. Das Durchschlagverhalten ist auch beim Bedrucken von Papieren mit sehr niedrigem Flächengewicht einwandfrei.

Ähnliche Ergebnisse erhält man, wenn an Stelle von Aerosil 380 Aerosil 300, (handelsübliche feindisperse Kieselsäure mit einer spezifischen Oberfläche nach BET von ca. 300 $m^2/g$ (Herst.: Degussa)) Aerosil 200 (handelsübliche feindisperse Kieselsäure mit einer spezifischen Oberfläche nach BET von ca. 200 $m^2/g$ (Herst.: Degussa)) oder HDK T 40, einer feindisersen Kieselsäure der Firma Wacker Chemie, eingesetzt werden.

Beispiel 3

Man verfährt wie bei Beispiel 1, setzt jedoch anstelle der dimerisierten Fettsäure 33,1 g Pripol 1040, einer handelsüblichen, trimerisierten Fettsäure der Firma Unichema, ein. Man erhält eine Lösung, die als wesentlichen gelösten Bestandteil einen über die trimerisierte Fettsäure dreifach verknüpften Pyridonazofarbstoff der in Beispiel 1 angegebenen Formel enthält. Daraus analog den Beispielen 1 und 2 hergestellte Druckfarben zeigen gleich gute Eigenschaften.

Beispiel 4

37,1 g (0,1 Mol) eines Pyridonazofarbstoffes der in Beispiel 1 angegebenen Formel, 200 ml Toluol und 50,4 g (0,3 Mol) 4-Methylhexahydrophthalsäureanhydrid werden 1 Stunde unter Rückfluß erhitzt, wobei alles in Lösung geht. Anschließend gibt man 1 g Methansulfonsäure und 32,2 g (0,24 Mol) eines Dipropylenglykolgemisches hinzu und erhitzt weiterhin unter Rückfluß, wobei man das sich bildende Veresterungswasser mit Hilfe eines Wasserabscheiders abtrennt. Nach ca. 1 Stunde wird soviel Toluol abdestilliert, daß die Temperatur ca. 130°C erreicht, und noch weitere 8 Stunden erhitzt. Man verfährt weiter wie bei Beispiel 1 und erhält 265 g einer Lösung, die einen über oligomere Ester aus 4-Methylhexahydrophthalsäureanhydrid und Dipropylenglykol verknüpften Pyridonazofarbstoff der in Beispiel 1 angegebenen Formel enthält. Daneben sind wahrscheinlich noch oligomere Ester aus 4-Methylhexahydrophthalsäure und Dipropylenglykol vorhan-

den. Eine analog zu Beispiel 1 hergestellte Druckfarbe zeigt ein noch besseres Durchschlagverhalten als eine Druckfarbe nach Beispiel 1. Analog zu Beispiel 2 unter Zusatz von feindispersen Kieselsäuren hergestellte Druckfarben ergeben zu den Druckfarben nach Beispiel 2 vergleichbare Ergebnisse.

Analog zu den in den Beispielen 1-4 angegebenen Verfahren wurden aus den in der Tabelle 1 aufgeführten Pyridonazofarbstoffen der folgenden allgemeinen Formel A durch Verestern mit den in der Tabelle 2 angegebenen Carbonsäuren, Carbonsäureanhydriden und Alkoholen in den dort angegebenen Mengen verknüpfte Pyridonazofarbstoffe hergestellt:

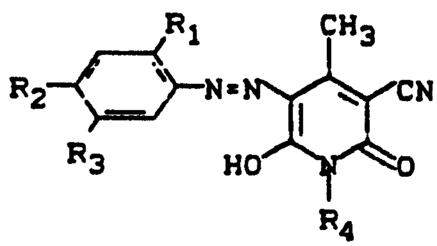

A

Tabelle 1:

| Farbstoff | $R_1$ | $R_2$ | $R_3$ | $R_4$ |
|---|---|---|---|---|
| I | $NO_2$ | $CH_3$ | H | $-CH_2CH_2CH_2OH$ |
| II | " | " | " | $-CH_2CH(OH)CH_3$ |
| III | " | " | " | $-CH_2CH_2OCH_2CH_2OH$ |
| IV | " | " | " | $-CH_2CH_2OH$ |
| V | $NO_2$ | Cl | " | $-CH_2CH_2OCH_2CH_2OH$ |
| VI | $NO_2$ | Cl | H | $-CH_2CH(OH)CH_3$ |
| VII | H | Cyclohexyl | " | $-CH_2CH_2OH$ |

Tabelle 1 (Fortsetzung)

| Farb-<br>stoff | $R_1$ | $R_2$ | $R_3$ | $R_4$ |
|---|---|---|---|---|
| VIII | " | " | " | $-CH_2CH_2OCH_2CH_2OH$ |
| IX | " | " | " | $-CH_2CH_2CH_2OH$ |
| X | " | tert.-Butyl | " | $-CH_2CH_2OCH_2CH_2OH$ |
| XI | " | " | " | $-CH_2CH_2CH_2OH$ |
| XII | $NO_2$ | " | " | $-CH_2CH_2CH_2OH$ |
| XIII | $CH_3$ | $NO_2$ | " | $-CH_2CH_2OCH_2CH_2OH$ |
| XII | H | 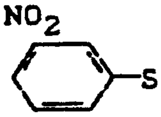 $-SO_2O-$ | " | $-CH_2CH_2CH_2OH$ |
| XV | $NO_2$ | $OCH_3$ | " | $-CH_2CH_2CH_2OH$ |
| XVI | $CH_3$ | $CH_3$ | $CH_3$ | $-CH_2CH_2CH_2OH$ |
| XVII | $OCH_3$ | H | $-SO_2N(CH_2CH_2OH)_2$ | $-CH_2CH(CH_2)_3CH_3$<br>$C_2H_5$ |
| XVIII | " | " | " | $-CH_2CH_2CH_2OH$ |
| XIX | H | $CH_3$ | Cl | $-CH_2CH_2CH_2OH$ |
| XX | H | $-OCH_2CH_2OH$ | " | $-CH_2CH_2CH_2OH$ |
| XXI | $NO_2$ | $CH_3$ | H | $-(CH_2)_5COOH$ |
| XXII | " | " | " | $-(CH_2)_{10}COOH$ |
| XXIII | " | Cl | " | $-(CH_2)_5COOH$ |
| XXIV | H | $-OCH_2COOH$ | " | $-CH_2CH(CH_2)_3CH_3$<br>$C_2H_5$ |
| XXV | H | $CH_3$ | " | $-CH_2CH_2OCH_2CH_2OH$ |
| XXVI | H | $CH_3$ | " | $-CH_2CH_2COOH$ |

Weitere in der Tabelle 2 aufgeführte Veresterungsprodukte von Pyridonazofarbstoffen wurden ausgehend von Pyridonazofarbstoffen der folgenden Formeln XXV-XXVII hergestellt:

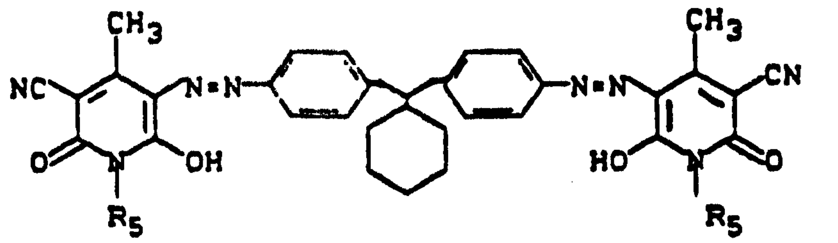

XXVII: $R_5$ = $(CH_2)_5COOH$

XXVIII: $R_5$ = $-CH_2CH_2OCH_2CH_2OH$

XXIX: $R_5$ = $-CH_2CH_2CH_2OH$

Tabelle 2

In der Spalte C wird die pro Mol Farbstoff eingesetzte Menge an Carbonsäure oder Carbonsäureanhydrid angegeben.

In der Spalte A wird die pro Mol Farbstoff eingesetzte Menge an Alkohol angegeben.

Tabelle 2 (Fortsetzung)

| Bsp. | Farbstoff | C | Carbonsäure oder Carbonsäureanhydrid | A | Alkohol |
|---|---|---|---|---|---|
| 5 | I | 3 | 4-Methylhexahydrophthalsäureanhydrid ("MHPA") | 2,4 | 1,2-Bis-(hydroxyethoxy-ethan |
| 6 | I | 3 | Phthalsäureanhydrid | 2,4 | 1,6-Hexandiol |
| 7 | I | 3 | " | 2,4 | Polyglykol P 400 |
| 8 | I | 2 | Dodecandisäure | 1,2 | Bis-hydroxymethyl-tricyclodecan "TCD-Diol") |
| 9 | II | 2 | " | 1,4 | " |
| 10 | II | 3 | MHPA | 2,4 | 1,6-Hexandiol |
| 11 | III | 3 | " | 2,4 | 1,2-Bis-(hydroxyethoxy)-ethan |
| 12 | III | 1,1 | Erucasäure | - | - |
| 13 | III | 3 | MHPA | 2,4 | 1,6-Hexandiol |
| 14 | III | 0,55 | Pripol 1010 | - | - |
| 15 | III | 3 | MHPA | 2 | Dipropylenglykol (Gemisch) |
| 16 | III | 3 | " | 2,2 | " |
| 17 | III | 3 | " | 2,4 | " |

Tabelle 2 (Fortsetzung)

| Bsp. | Farbstoff | C | Carbonsäure oder Carbonsäureanhydrid | A | Alkohol |
|---|---|---|---|---|---|
| 18 | III | 2 | Dodecenylbernsteinsäureanhydrid (Fibran) | 1,2 | 1,12-Octadecandiol |
| 19 | III | 2 | " | 1,4 | " |
| 20 | III | 2 | Dodecandisäure | 1,4 | TCD-Diol |
| 21 | III | 1,5 | Fibran | - | - |
| 22 | IV | 1,5 | Phthalsäureanhydrid | 1,2 | 1,6-Hexandiol |
| | | 1,5 | MHPA | 1,2 | Polyglykol P 400 |
| 23 | V | 1,1 | Erucasäure | - | - |
| 24 | V | 0,33 | Pripol 1040 | - | - |
| 25 | V | 0,55 | Pripol 1010 | | |
| 26 | VI | 2 | Dodecandisäure | 1,1 | TCD-Diol |
| 27 | VII | 0,55 | Pripol 1010 | - | - |
| 28 | VII | 1 | " " | 1,4 | 1,4-Bis-(2-hydroxyethoxy)-benzol |
| 29 | VIII | 2 | MHPA | 1,6 | 1,1,1-Trimethylolethan |
| | | 1 | Dodecandisäure | | |

Tabelle 2 (Fortsetzung)

| Bsp. | Farbstoff | C | Carbonsäure oder Carbonsäureanhydrid | A | Alkohol |
|---|---|---|---|---|---|
| 30 | VIII | 1,1 | Pripol 1010 | 0,5 | 4,4'-Bis-(2-hydroxyethoxy)-diphenylsulfon |
| 31 | VIII | 0,55 | Pripol 1040 | 0,22 | " |
| 32 | VIII | 1,1 | Pripol 1010 | 0,5 | N,N'-Bis-(2-hydroxyethoxy)-benzolsulfonamid |
| 33 | VIII | 0,5 | Pripol 1040 | 0,22 | 1,1,1-Trimethylolethan |
| 34 | VIII | 0,75 | Fibran | - | - |
| 35 | IX | 0,5 | " | - | - |
| 36 | X | 1 | " | 0,4 | TCD-Diol |
| 37 | X | 2 | " | 1,2 | " |
| 38 | X | 2 | " | 0,9 | 1,1,1-Trimethylolethan |
| 39 | X | 2 | Dodecandisäure | 1,2 | TCD-Diol |
| 40 | XI | 0,7 | Fibran | - | - |
| 41 | XI | 2 | Dodecandisäure | 1,4 | TCD-Diol |
| 42 | XI | 1,1 | Ölsäure | - | - |
| 43 | XII | 0,33 | Pripol 1040 | - | - |
| 44 | XII | 2 | Dodecandisäure | 1,4 | TCD-Diol |

<u>Tabelle 2</u> (Fortsetzung)

| Bsp. | Farb-stoff | C | Carbonsäure oder Carbonsäure-anhydrid | A | Alkohol |
|---|---|---|---|---|---|
| 45 | XIII | 0,55 | Pyripol 1010 | - | - |
| 46 | XIV | 0,33 | Pyripol 1040 | - | - |
| 47 | XV | 1,1 | Erucasäure | - | - |
| 48 | XV | 0,55 | Pripol 1010 | - | - |
| 49 | XVI | 2 | Dodecandisäure | 1,2 | TCD-Diol |
| 50 | XVI | 2 | " | 1,4 | " |
| 51 | XVII | 1,5 | Fibran | - | - |
| 52 | XVII | 2 | " | - | - |
| 53 | XVIII | 2 | " | - | - |
| 54 | XVIII | 3 | " | - | - |
| 55 | XIX | 0,7 | " | - | - |
| 56 | XX | 1,5 | " | - | - |
| 57 | XX | 3 | MHPA | 1,8 | 1,6-Hexandiol |
| 58 | XXI | 1,2 | Dodecandisäure | 2 | 1,12-Octadecandiol |
| 59 | XXI | 1,4 | Dodecandisäure | 2 | " |
| 60 | XXI | 1,2 | Pripol 1010 | 2 | " |
| 61 | XXII | 1,2 | " | 2 | " |
| 62 | XXIII | 1,2 | Dodecandisäure | 2 | 1,12-Octadecandiol |

Tabelle 2 (Fortsetzung)

| Bsp. | Farbstoff | C | Carbonsäure oder Carbonsäure-anhydrid | : A | Alkohol |
|---|---|---|---|---|---|
| 63 | XXIII | 1,4 | " | 2 | Polyglykol P 400 |
| 64 | XXIII | 0,4 | " | 1 | " " " |
| 65 | XXIV | 1 | Riccinolsäure | 1,1 | TCD-Diol |
| 66 | XXVII | 2 | " | 1,1 | 1,6-Hexandiol |
| 67 | XXVII | - | - | 2,2 | Oleylalkohol |
| 68 | XXVII | 0,2 | Pripol 1010 | 2,5 | " |
| 69 | XXIII | 1,2 | Fibran | - | - |
| 70 | XXIII | 1,5 | " | - | - |
| 71 | XXIII | 2 | " | - | - |
| 72 | XXIV | 3 | Erucasäure | - | - |
| 73 | XXV | 2 | Hexahydrophthalsäureanhydrid | 1,4 | Triethylenglykol |
| 74 | XXV | 2 | " | 1,4 | Tetraethylenglykol |
| 75 | XXV | 2,5 | " | 1 | Triethylenglykol |
| | | | | 0,6 | Trimethylolpropan |
| 76 | XXVI | 0,9 | Dodecandisäure | 1,5 | Tetraethylenglykol |
| 77 | XXVI | 1,4 | " | 2 | " |
| 78 | XXVII | 4 | " | 3 | " |
| 79 | XXVIII | 4,5 | " | 2,5 | " |
| 80 | XXIX | 4 | " | 0,8 | Oleylalkohol |

Von den Farbstoffen der Beispiele 5-80 wurden analog zu den Beispielen 1-4 Druckfarben hergestellt, wobei jeweils durch Variation der Harzmenge eine Viskosität entsprechend einer Auslaufzeit von 23 Sekunden aus dem DIN-3 Becher eingestellt wurde. Die Druckfarben ergaben gelbe bis orange, farbstarke Drucke, wobei das Durchschlagverhalten dem der Druckfarben nach Beispiel 1-4 entsprach.

Beispiel 81

11,3 g 2,2-Bis-(4-aminophenyl)-propan, 100 ml Wasser und 28 ml 1N Salzsäure werden kurz verrührt und die Mischung durch Eiseinwerfen auf 0°C gebracht. Durch Zutropfen einer wäßrigen Lösung von 7 g Natriumnitrit wird diazotiert und die überschüssige salpetrige Säure nach 15 Minuten mit Amidosulfonsäure zerstört. Zu den geklärten Diazotierung tropft man bei 0-5°C in ca. 1 Std. eine Lösung von 42 g 5-Cyan-2-hydroxy-4-methyl-1-oleyl-pyridon-(5) und 3 g eines handelsüblichen Netzmittels auf Basis Natrium-dioctylsulfosuccinat (Aerosol OT) in 350 ml Wasser und 14 ml 10 N Natronlauge. Nach 10 Stunden bei Raumtemperatur wird auf 50°C aufgeheizt, wobei alles auskuppelt. Der entstehende gelbe Farbstoff wird abgesaugt, mit Wasser gewaschen und i.Vak. bei 50°C getrocknet. Man erhält 53 g einer gelben Substanz der Formel

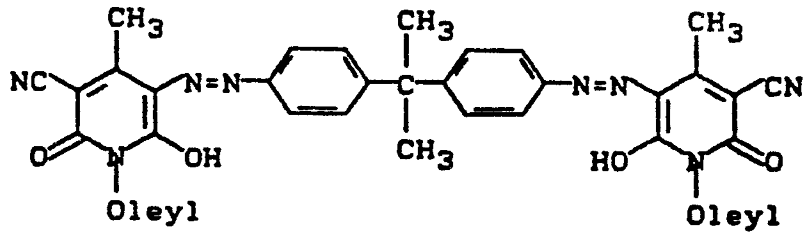

Löst man 6 Teile des Farbstoffes und 31 Teile Erkazit 899 in 63 Teilen Toluol, so erhält man eine Tiefdruckfarbe, die auf Papier neutralgelbe Drucke ergibt, die bereits ein sehr günstiges Durchschlagsverhalten zeigen. Eine analoge Druckfarbe aus 6 Teilen des Farbstoffes, 30 Teilen Erkazit 899 und 63 Teilen Toluol, die zusätzlich 0,7 Teile Aerosil 380 dispergiert enthält, liefert gleich farbstarke Drucke und zeigt eine nochmals reduzierte Durchschlagsneigung.

Beispiel 82

15,2 g 4-Methyl-2-nitro-anilin werden mit 70 ml 5 N-Salzsäure verrührt und wie üblich diazotiert. Die geklärte Diazotierung tropft man zu einer Mischung aus einer Lösung von 42 g 5-Cyan-2-hydroxy-4-methyl-1-oleyl-pyridon-(6) in 200 ml Toluol 70 ml Wasser, 6 g Bernsteinsäure und 8 ml 10 N Natronlauge, wobei man die Temperatur durch Eiseinwerfen bei 0-10°C und den pH-Wert durch Zutropfen von Natronlauge bei 5,5 hält. Die Kupplung ist nach 15 Min. beendet. Die Mischung wird auf 60°C aufgeheizt und die Toluolphase abgetrennt. Nach Trocknen über Natriumsulfat und Klären wird ein Teil des Toluols abdestilliert. Man erhält 130 g einer Lösung, die ca. 56 g des Farbstoffes der folgenden Formel enthält:

 0211325

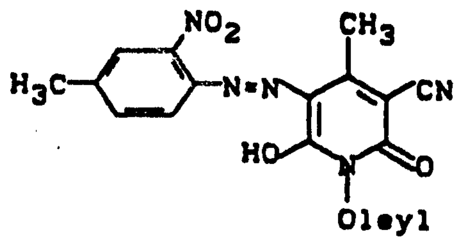

Eine daraus nach Beispiel 1 hergestellte Toluoltiefdruckfarbe ergibt farbstarke gelbe Drucke, zeigt jedoch ein etwas schlechteres Durchschlagverhalten als die Druckfarbe nach Beispiel 1. Eine analog zu Beispiel 2 hergestellte Druckfarbe zeigt dagegen auch auf Papieren mit niedrigem Flächengewicht ein ausgezeichnetes Durchschlagverhalten.

Analog zu der in Beispiel 82 beschriebenen Methode wurden aus den in Tabelle 3 aufgeführten Komponenten Farbstoffe hergestellt und daraus Druckfarben, die das gleiche Eigenschaftsbild zeigen, wie die Druckfarben nach Beispiel 82.

Tabelle 3

| Bsp. Nr. | Diazokomponente | Kupplungskomponente |
|---|---|---|
| 83 | 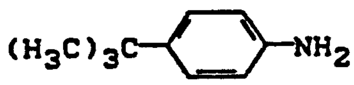 | 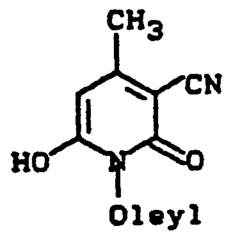 |
| 84 | 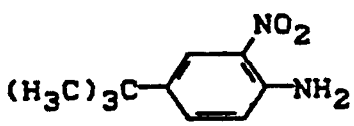 | " |
| 85 | 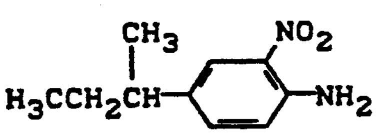 | " |
| 86 | 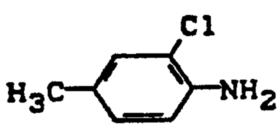 | " |
| 87 | 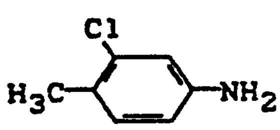 | " |

Tabelle 3

| Bsp. Nr. | Diazokomponente | Kupplungskomponente |
|---|---|---|
| 88 | 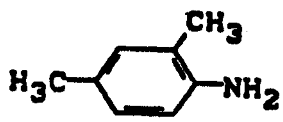 | 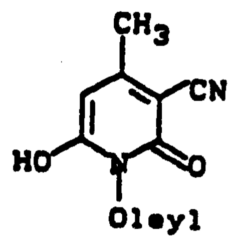 |
| 89 | 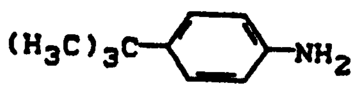 | 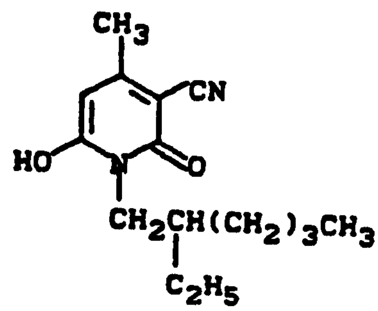 |
| 90 | 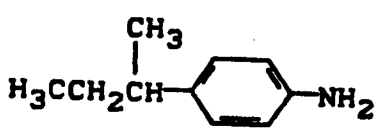 | " |
| 91 | 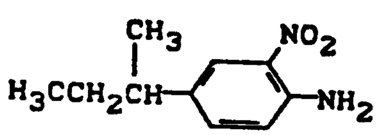 | " |

## B. Beispiele mit Phthalocyaninfarbstoffen

### Beispiel 1

57,5 g Kupferphthalocyanin werden in 308 g Chlorsulfonsäure so lange bei 108 bis 110°C gerührt bis im Mittel 2,8 Sulfonsäure- oder Sulfonsäurechlorid-Gruppen in das Phthalocyanin-Molekül eingetreten sind. Anschließend werden bei 85°C allmählich 60 g Thionylchlorid eingerührt und so lange bei 90°C nachgerührt bis alle Sulfonsäure-Gruppen in Sulfonsäurechlorid-Gruppen übergeführt sind. Nach dem Abkühlen wird die Schmelze auf Eis ausgetragen, das Kupferphthalocyaninsulfonsäurechlorid abgesaugt und mit Eiswasser gewaschen.

Die erhaltene Paste wird in eine Lösung von 85 g Dodecylamin in 350 g Diethylenglykolmonoethylether eingerührt. Mit Hilfe von verdünnter Natronlauge hält man den pH-Wert der Reaktionsmischung bis zur Beendigung der Reaktion auf 9,5 bis 10. Zur Aufarbeitung wird mit Methanol verdünnt, abgesaugt, mit Wasser ausgerührt, wieder abgesaugt und getrocknet. Man erhält 114 g des Farbstoffes der Formel

$$Cu\text{-}Pc\text{-}(3)\text{-}(SO_2NH\text{-}C_{12}H_{25})_{2,8}$$

der eine hervorragende Löslichkeit in Toluol besitzt.

6 g des obigen Farbstoffes werden zusammen mit 26 g Erkazit 899, einem Calciumresinat der Firma Lackharzwerke Robert Krämer, in 68 g Toluol gelöst. Man erhält eine Toluol-Tiefdruckfarbe mit einer Viskosität, die einer Auslaufzeit von 23 Sekunden im DIN 3 Becher nach DIN 53 211 entspricht. Mit dieser Druckfarbe werden auf einem

Dürner Tiefdruck Handandruckgerät Tiefdruckpapiere bedruckt, wobei farbstarke türkisblaue Drucke erhalten werden. Beim Beurteilen dieser Drucke zeigt sich, daß die Druckfarbe bereits ein recht gutes Durchschlagverhalten aufweist. Lediglich auf sehr leichten Papieren wird ein gegenüber ausschließlich mit Hilfe von Pigmenten hergestellen Druckfarben gleicher Viskosität ein etwas schlechteres Durchschlagverhalten gefunden.

Zu Toluol-Tiefdruckfarben mit ähnlichen Eigenschaften gelangt man, wenn man anstelle des obengenannten Farbstoffes die Farbstoffe einsetzt, die man erhält, wenn man die in der Spalte 2 der nachfolgenden Tabelle genannten Kupferphthalocyaninsulfonsäurechloride mit den in Spalte 3 genannten Aminen umsetzt. Bei der Herstellung der Toluol-Druckfarben muß man, um die gewünschte Viskosität von 23 Sekunden im DIN 3 Becher nach DIN 53 211 zu erhalten, die Mengenverhältnisse zwischen dem Erkazit-Harz und Toluol etwas variieren.

Tabelle 1

| Beispiel 1 | Cu-Pc-sulfonsäurechlorid | Amin | Farbton |
|---|---|---|---|
| a) | Cu-Pc-(3)-$SO_2Cl)_{2,4}$ | 2-Ethylhexylamin | türkis |
| b) | " | Oleylamin | " |
| c) | Cu-Pc-(3)-$SO_2Cl)_{2,8}$ | Dodecylamin | " |
| d) | " | 2-Ethylhexylamin | " |
| e) | " | Oleylamin | " |
| f) | " | N-Methylstearylamin | " |
| g) | " | 3-Amino-5-methyl-1-phenylhexan | " |
| h) | " | 2'-Ethylhexoxypropylamin | " |
| i) | Cu-Pc-(3)-$SO_2Cl)_{3,3}$ | Dodecylamin | " |
| k) | " | Oleylamin | " |
| l) | Cu-Pc-(3)-$SO_2Cl)_{2,1}$ | 3-Amino-5-methyl-1-phenylhexan | " |
| m) | " | 2-Ethylhexylamin | " |
| n) | Cu-Pc-(3)-$SO_2Cl)_{2,8}$ | Dodecylanilin | grünstichiges türkis |

Beispiel 2

6 g des Farbstoffes, den man nach Beispiel 1, Absatz 2 erhält, werden zusammen mit 25,2 g Erkazit 899, einem Calciumresinat der Firma Lackharzwerke Robert Krämer, in 68 g Toluol gelöst. In diese Lösung werden 0,8 g Aerosil 380, einer fein dispersen Kieselsäure der Firma Degussa eingerührt und auf mechanische Weise (z.B. in einem Red Devil) fein dispergiert. Die Druckfarbe entspricht in ihren Eigenschaften weitgehend der Druckfarbe, die nach Beispiel 1 erhalten wurde, zeigt jedoch beim Bedrucken von Papieren mit niedrigem Flächengewicht ein noch besseres Durchschlagsverhalten.

Anstelle von Aerosil 380 können auch Aerosil 300, Aerosil 200 oder HDKT 40, eine fein disperse Kieselsäure der Firma Wacker Chemie, eingesetzt werden. Die genannten Kieselsäuren haben spezifische Oberflächen nach BET von 380, 300, 200 bzw. 400 $m^2/g$.

Auch die in Beispiel 1, Tabelle 1 genannten Türkisfarbstoffe können wie in Absatz 1 beschrieben in Toluol-Tiefdruckfarben übergeführt werden, die im Druck ein gutes Durchschlagsverhalten aufweisen, wobei je nach Löslichkeit des Farbstoffes die Mengen von Erkazit 899 und Toluol etwas variiert werden müssen.

Beispiel 3

57,5 g Kupferphthalocyanin werden in 308 g Chlorsulfonsäure so lange bei 108 bis 110°C gerührt bis im Mittel 3 Sulfonsäure- oder Sulfonsäurechlorid-Gruppen in das Phthalocyanin-Molekül eingetreten sind. Anschließend werden bei 85°C allmählich 60 g Thionylchlorid eingerührt und so lange bei 90°C nachgerührt bis alle Sulfonsäure-Gruppen in Sulfonsäurechlorid-Gruppen übergeführt sind. Nach dem Abkühlen wird die Schmelze auf Eis ausgetragen, das Kupferphthalocyaninsulfonsäurechlorid abgesaugt und mit Eiswasser gewaschen.

Die erhaltene Paste wird in eine Lösung von 85 g 2-Phenyl-2-(4-hydroxyphenyl)-propan, 16 g Natriumhydroxyd und 800 g Wasser gegeben. Man steigert die Temperatur des Reaktionsgemisches auf 25°C, rührt einige Stunden bei dieser Temperatur und zur Vervollständigung des Umsatzes noch einige Zeit bei 45 bis 50°C. Nach dem Abkühlen wird das Reaktionsprodukt abgesaugt, mit Wasser, Methanol und nochmals mit Wasser gewaschen und getrocknet. Man erhält in nahezu quantitativer Ausbeute den türkisblauen Farbstoff der Formel

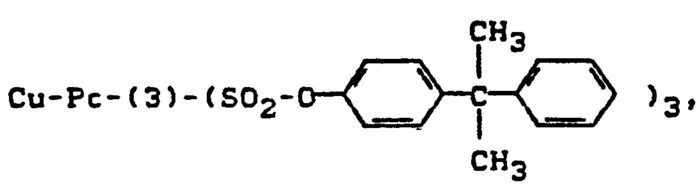

der eine hervorragende Löslichkeit in Toluol besitzt.

6 g des obigen Farbstoffes werden zusammen mit 29 g Erkazit 899, einem Calciumresinat der Firma Lackharzwerke Robert Krämer in 65 g Toluol gelöst. Man erhält eine Toluol-Tiefdruckfarbe mit einer Viskosität, die einer Auslaufzeit von 23 Sekunden im DIN 3 Becher nach DIN 53 211 entspricht. Mit dieser Druckfarbe werden auf einem Dürner Tiefdruck Handdruckgerät Tiefdruckpapiere bedruckt, wobei farbstarke türkisblaue Drucke erhalten werden. Die Druckfarbe weist bereits ein recht gutes Durchschlagsverhalten auf. Lediglich auf leichten Papieren wird ein gegenüber ausschließlich mit Hilfe von Pigmenten hergestellten Druckfarben gleicher Viskosität ein etwas schlechteres Durchschlagsverhalten gefunden.

Das Durchschlagsverhalten der Druckfarbe kann verbessert werden, wenn man der Druckfarbe, wie in Beispiel 2 beschrieben, 0,8 g Aerosil 380, eine feindisperse Kieselsäure der Firma Degussa, zusetzt und in der Farbstofflösung fein dispergiert. Anstelle von Aerosil 380 können auch Aerosil 300, Aerosil 200 oder HDKT 40, eine fein disperse Kieselsäure der Firma Wacker Chemie, eingesetzt werden.

Mit ähnlichem Erfolg kann man den in Absatz 2 genannten Farbstoff durch die Farbstoffe ersetzen, die man erhält, wenn man die in Spalte 2 der nachfolgenden Tabelle genannten Kupferphthalocyaninsulfonsäurechloride mit den in Spalte 3 genannten Phenolen umsetzt. Bei der Herstellung der Toluol-Druckfarben muß man, um die gewünschte Viskosität von 23 Sekunden im DIN 3 Becher nach DIN 53 211 zu erhalten, gegebenenfalls die Mengenverhältnisse zwischen dem Erkazit-Harz und Toluol etwas variieren.

Tabelle 2

| Beispiel 1 | Cu-Pc-sulfonsäurechlorid | Phenol | Farbton |
|---|---|---|---|
| a) | Cu-Pc-(3)-$SO_2Cl)_3$ | 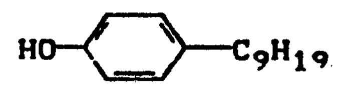 | türkisblau |
| b) | Cu-Pc-(3)-$SO_2Cl)_{2,4}$ | 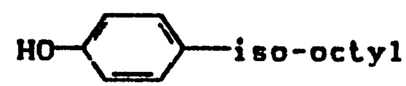 | türkisblau |
| c) | Cu-Pc-(3)-$SO_2Cl)_{2,4}$ | 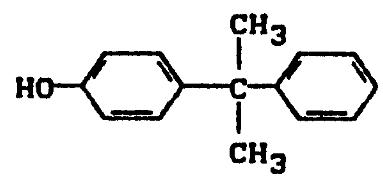 | türkisblau |
| d) | Cu-Pc-(3)-$SO_2Cl)_{2,9}$ | 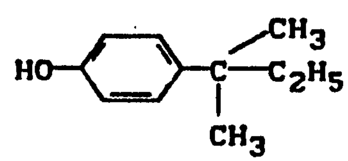 | türkisblau |
| e) | Cu-Pc-(3)-$SO_2Cl)_3$ | 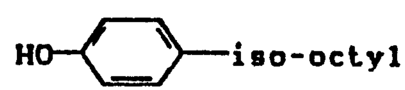 | türkisblau |

Beispiel 4

21,8 g des Kupferphthalocyaninsulfonsäureamid-Derivates, das man erhält, wenn man das nach Beispiel 3, Absatz 1 erhaltene Kupferphthalocyaninsulfonsäurechlorid mit 7,5 g Propanolamin und 26 g 2-Ethylhexylamin unter Verwendung von Natriumhydroxyd als säurebindendes Mittel umsetzt, werden in 40 g Toluol zusammen mit 5,6 g Ölsäure und 0,1 g Methansulfonsäure zum Sieden erhitzt. Das sich bildende Veresterungswasser wird mit Hilfe eines Wasserabscheiders abgetrennt und dabei das Toluol so weit abdestilliert, daß ein Siedepunkt von 120°C bis 130°C erreicht wird. Man läßt 8 Stunden bei dieser Temperatur reagieren, kühlt ab und versetzt das Reaktionsgemisch mit Methanol, saugt ab, wäscht kurz mit Methanol und trocknet. Der erhaltene türkisblaue Farbstoff entspricht im wesentlichen der Formel

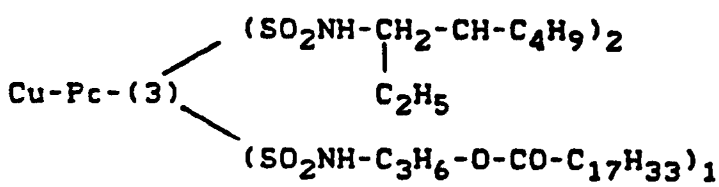

und hat eine gute Löslichkeit in Toluol.

7 g des obigen Farbstoffes werden zusammen mit 25 g Erkazit 899, einem Calciumresinat der Firma Lackharzwerke Robert Krämer, in 68 g Toluol gelöst. Man erhält eine Toluol-Tiefdruckfarbe, mit der auf einem Dürner Tiefdruck Handandruckgerät Tiefdruckpapiere türkisblau bedruckt werden können. Die Druckfarbe weist bereits ein recht gutes

Durchschlagsverhalten auf. Lediglich auf sehr leichten Papieren wird ein gegenüber ausschließlich mit Hilfe von Pigmenten hergestellten Druckfarben gleicher Viskosität ein etwas schlechteres Durchschlagsverhalten gefunden.

Zu Druckfarbstoffen mit ähnlichen Eigenschaften gelangt man, wenn man das in Absatz 1 genannte Propanolamin durch äquimolare Mengen von Ethanolamin, Butanolamin oder Diethylamin, bzw. das in Absatz 1 verwendete 2-Ethylhexylamin durch äquimolekulare Mengen von Dodecylamin, Oleylamin, 3-Amino-5-methyl-1-phenylhexan oder 2'-Ethylhexoxypropylamin bzw. die dort genannte Ölsäure durch Undecylensäure, Laurinsäure, Myristinsäure, Palmitinsäure oder Stearinsäure ersetzt.

## C. Beispiele mit Anilinazofarbstoffen

### Beispiel 1

17,3 g (0,1 Mol) 2-Chlor-4-nitro-anilin werden über Nacht mit einer Mischung von 40 ml Wasser und 35 ml 10 N Salzsäure verrührt. Durch Eiseinwerfen wird die Mischung auf 0° C gebracht und mit einer wäßrigen Lösung von 7,0 g Natriumnitrit diazotiert. Der Ansatz wird 2 Std. bei 0-5° C gerührt und dabei stets ein Nitritüberschuß aufrechterhalten. Danach wird die überschüssige salpetrige Säure mit Amidosulfonsäure zerstört. Hierzu gibt man eine Lösung von 45,6 g N-[3-(Dipropylamino)phenyl]-oleoylamid in Form des Hydrochlorides in 50 ml Eisessig. Im Verlauf von 5 Std. ist die Kupplung beendet. Der Niederschlag wird abgesaugt und gut mit Wasser gewaschen. Die feuchte Paste wird mit 300 ml Toluol aufgenommen und die Lösung mit 200 ml einer 1 N Sodalösung gewaschen. Die organische Phase wird abgetrennt und das Toluol abdestilliert. Der verbleibende Rückstand (61,8 g) wird in 60 g Toluol gelöst. Man erhält eine 50 %ige Lösung eines Farbstoffes der Formel

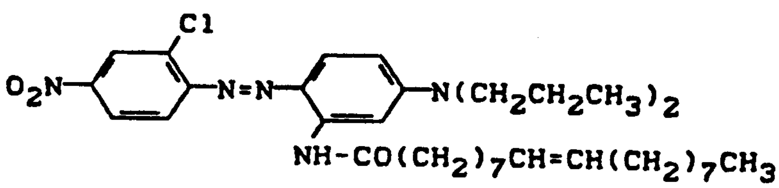

10 g der Farbstofflösung, 69,5 g Toluol und 25,5 g Alsynol KZ 71, einem Kohlenwasserstoffharz der Firma Synres, werden gemischt. Man erhält eine Toluoltiefdruckfarbe mit einer Viskosität, die einer Auslaufzeit von 23 Sekunden

im DIN 3 Becher nach DIN 53 211 entspricht. Mit dieser Druckfarbe werden auf einem Dürner Tiefdruck Handandruckgerät Tiefdruckpapiere bedruckt, wobei sehr farbstarke blaustichig rote Drucke erhalten werden. Beim Beurteilen dieser Drucke zeigt sich, daß die Druckfarbe bereits ein recht gutes Durchschlagverhalten aufweist.

Lediglich auf sehr leichten Papieren wird ein gegenüber ausschließlich mit Hilfe von Pigmenten hergestellten Druckfarben gleicher Viskosität ein etwas schlechteres Durchschlagverhalten gefunden.

Beispiel 2

Man stellt analog zu Beispiel 1 eine Druckfarbe her, die aus 10 g der Farbstofflösung nach Beispiel 1, 70 g Toluol und 25 g Alsynol KZ 71 besteht und die zusätzlich noch 0,8 g Aerosil 380, einer feindispersen Kieselsäure der Firma Degussa, dispergiert enthält. Die Druckfarbe entspricht in ihren Eigenschaften der Druckfarbe nach Beispiel 1, jedoch ist das Durchschlagverhalten auch beim Bedrucken von Papieren mit niedrigem Flächengewicht einwandfrei.

Ähnliche Ergebnisse erhält man, wenn man anstelle von Aerosil 380, Aerosil 300, Aerosil 200 oder HDKT 40, einer fein dispersen Kieselsäure der Firma Wacker Chemie,. einsetzt.

Die genannten Kieselsäuren haben spezifische Oberfläche nach BET von 380, 300, 200 bzw. 400 $m^2/g$.

Analog den Beispielen 1 und 2 werden Druckfarben mit Hilfe der aus den in der nachfolgenden Tabelle aufgeführten Komponenten hergestellten Farbstoffe mit ähnlichen Eigenschaften erhalten:

| Bsp. Nr. | Diazokomponente | Kupplungskomponente | Farbton des Druckes |
| --- | --- | --- | --- |
| 3 | 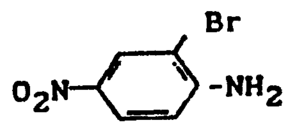 | 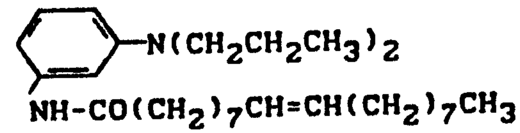 | blaustichig rot |
| 4 | 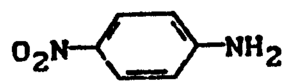 | " | rot |
| 5 | 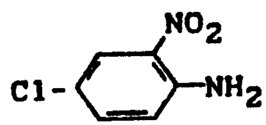 | " | rot |
| 6 | 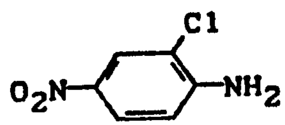 | 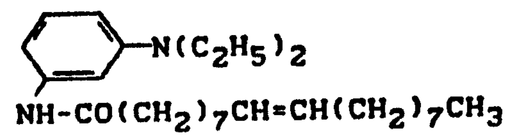 | blaustichig rot |

| Bsp. Nr. | Diazokomponente | Kupplungskomponente | Farbton des Druckes |
| --- | --- | --- | --- |
| 7 | 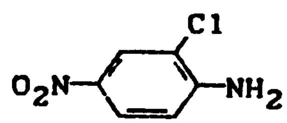 | 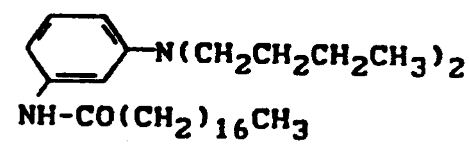 | blau-stichig rot |
| 8 | " | 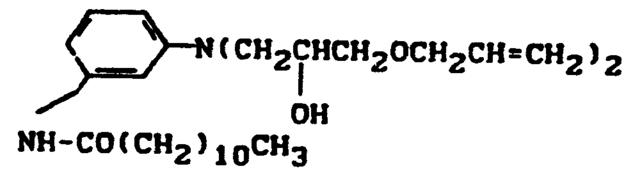 | " |
| 9 | " | 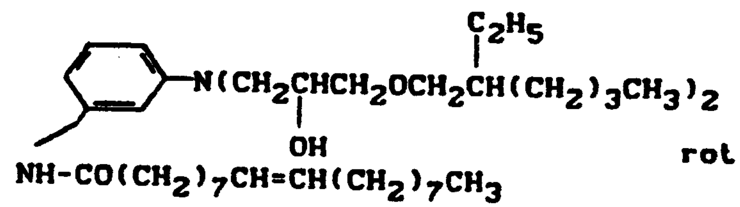 | rot |
| 10 | 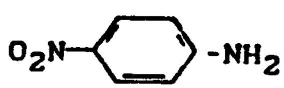 | 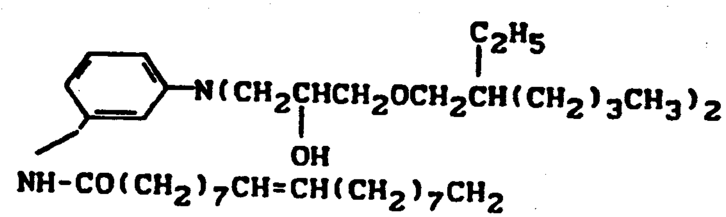 | rot |

| Bsp. Nr. | Diazokomponente | Kupplungskomponente | Farbton des Druckes |
|---|---|---|---|
| 11 | 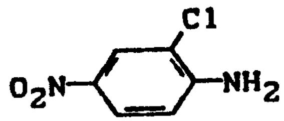 | 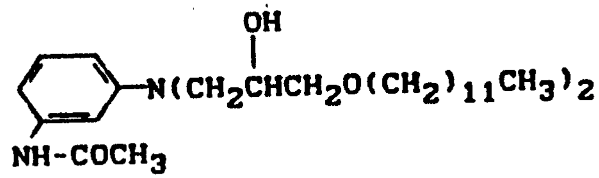 | blau-stichig rot |
| 12 | 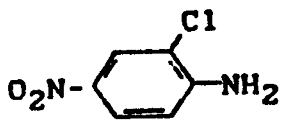 | 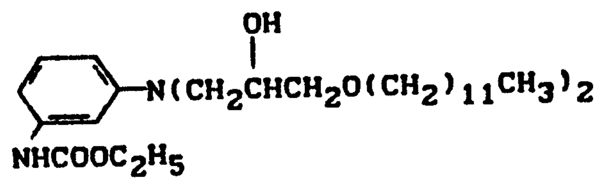 | " |
| 13 | 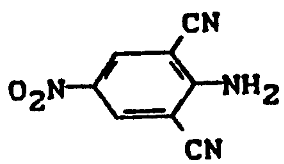 | 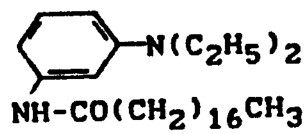 | blau |
| 14 | 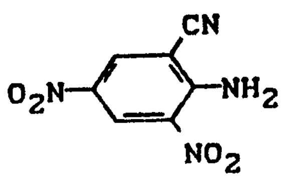 | 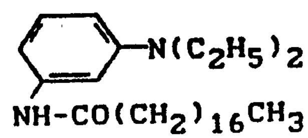 | blau |

| Bsp. Nr. | Diazokomponente | Kupplungskomponente | Farbton des Druckes |
|---|---|---|---|
| 15 | 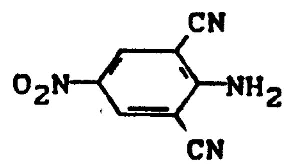 | 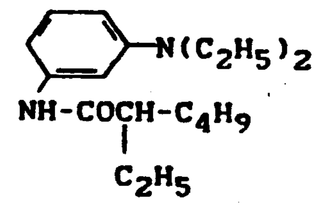 | blau |
| 16 | 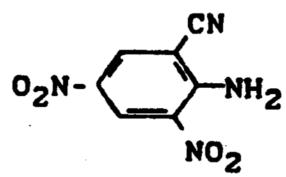 | 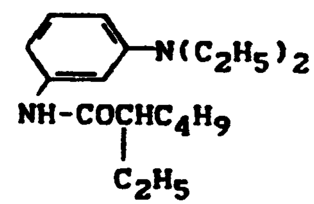 | blau |

Beispiel 17

37,9 g eines durch Kuppeln von diazotiertem 2-Chlor-4-nitroanilin mit N,N-Bis-(2-hydroxyethyl)-3-methylanilin erhaltenen Farbstoffes, 200 ml Toluol und 58,6 g Fibran 68, einem Dodecenylbernsteinsäureanhydrid (Gemisch) der Firma National Starch, werden 12 Std. unter Rückfluß erhitzt und danach ein Teil des Toluol abdestilliert. Man erhält 135 g einer dunkel gefärbten Lösung eines Farbstoffgemisches der allgemeinen Formel

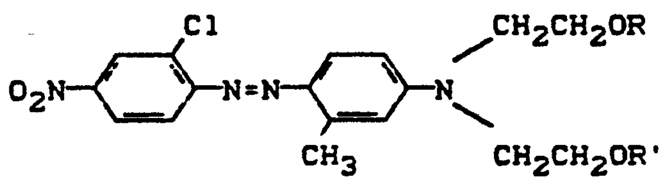

wobei die Reste R und R' für Dodecenylbernsteinsäurehalbestergruppierungen stehen.

Analog zu den Beispielen 1 und 2 hergestellte Druckfarben ergeben rote Drucke mit ganz ähnlichen Eigenschaften wie die dort beschriebenen.

Nach dem im Beispiel 17 beschriebenen Verfahren wurden die in der folgenden Tabelle aufgeführten Farbstoffe mit den ebenfalls in der Tabelle angegebenen Anhydriden umgesetzt. Die aus den so erhaltenen neuartigen Estern hergestellten Druckfarben waren in ihren Eigenschaften mit den nach den Beispielen 1 und 2 hergestellten vergleichbar.

| Bsp. Nr. | Farbstoff | Anhydrid | Farbton des Druckes |
|---|---|---|---|
| 18 | 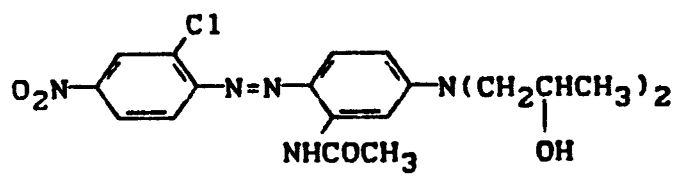 | Fibran | blaustichig rot |
| 19 | " | 4-Methyl-hexahydrophthal-säureanhydrid (= MHPA) | " " |
| 20 | 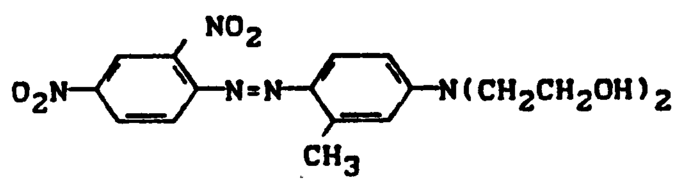 | MHPA | blaustichig rot |
| 21 | " | Fibran | " " |
| 22 | 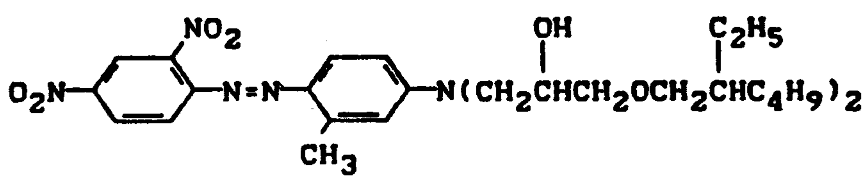 | Phthalsäureanhydrid | " " |

| Bsp. Nr. | Farbstoff | Anhydrid | Farbton des Druckes |
|---|---|---|---|
| 23 | 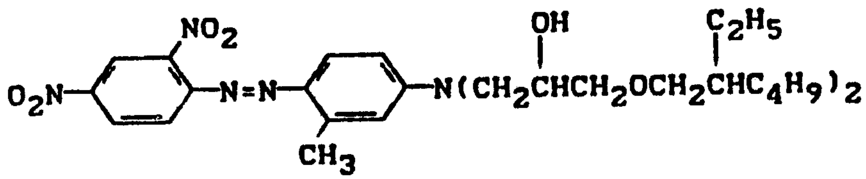 | MHPA | blaustichig rot |
| 24 | 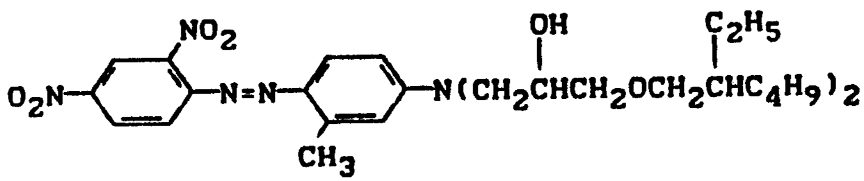 | Hexahydrophthal-säureanhydrid | " " |
| 25 | 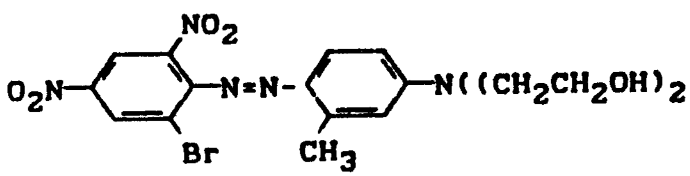 | Fibran | " " |
| 26 | 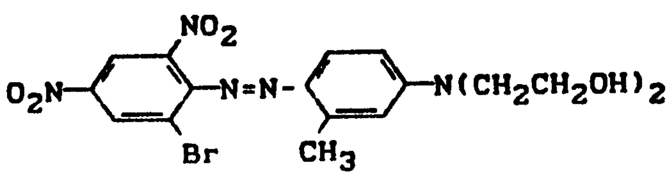 | MHPA | " " |

| Bsp. Nr. | Farbstoff | Anhydrid | Farbton des Druckes |
|---|---|---|---|
| 27 | 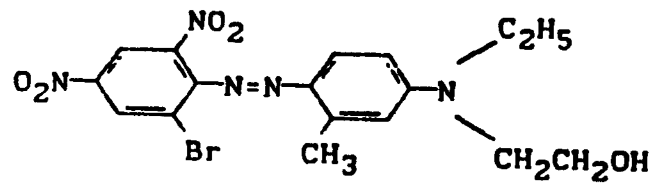 | Fibran | violett |
| 28 | 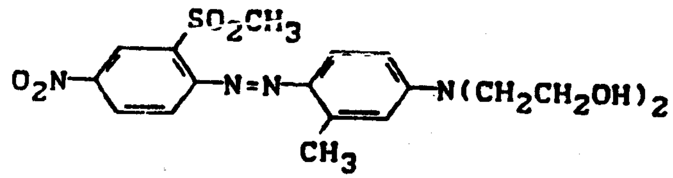 | " | rot |
| 29 | 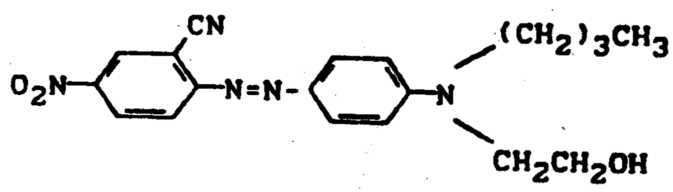 | " | rot |

Ebenfalls gut geeignete Druckfarben konnten mit Hilfe der Farbstoffe der folgenden Tabelle 3 hergestellt werden.

Tabelle 3:

| | | Farbton des Druckes |
|---|---|---|
| Bsp. 30 | 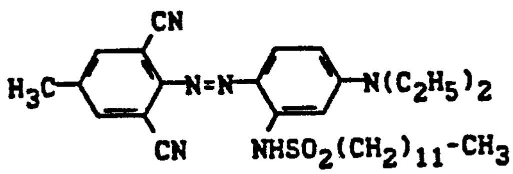 | blaust. rot |
| Bsp. 31 | 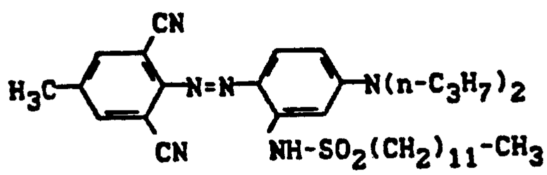 | " |
| Bsp. 32 | 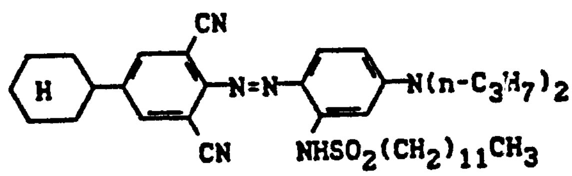 | " |
| Bsp. 33 | 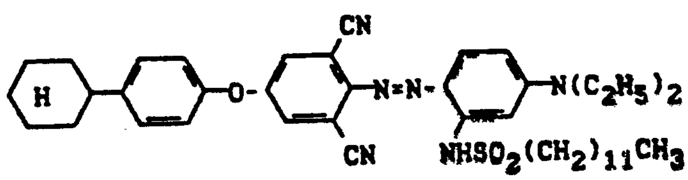 | " |
| Bsp. 34 | 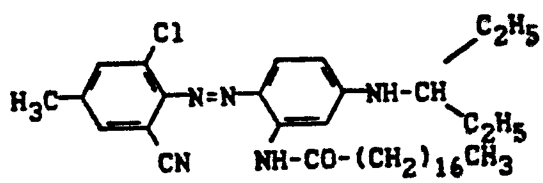 | " |
| Bsp. 35 | 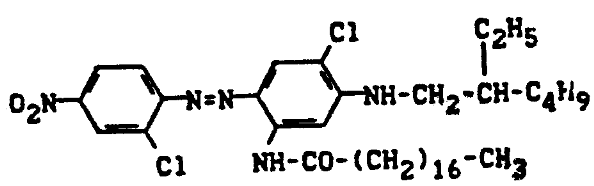 | rot |
| Bsp. 36 | 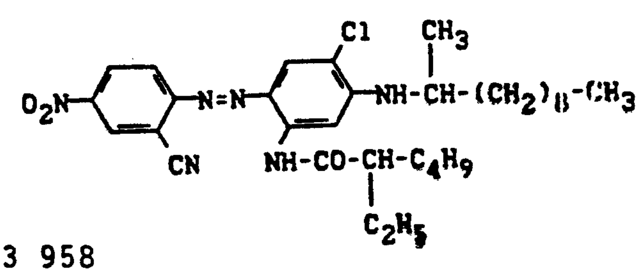 | blaust. rot |

Tabelle 3 (Fortsetzung)

| | | Farbton des Druckes |
|---|---|---|
| Bsp. 37 | 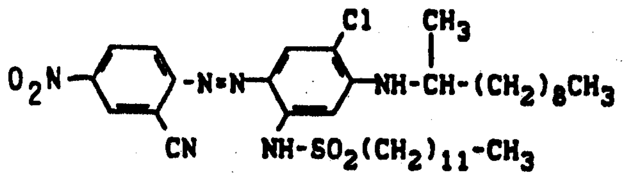 | blaust. rot |
| Bsp. 38 | 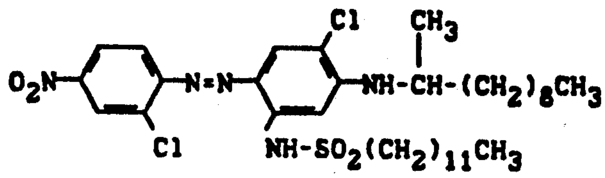 | rot |
| Bsp. 39 | 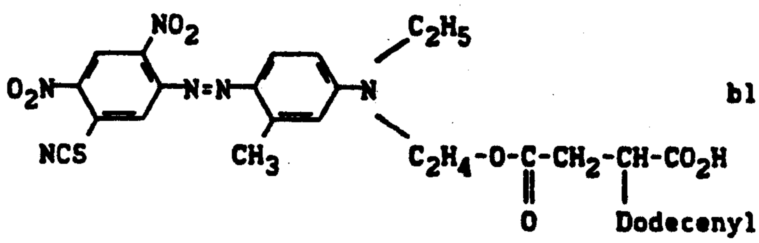 | blau |
| Bsp. 40 | 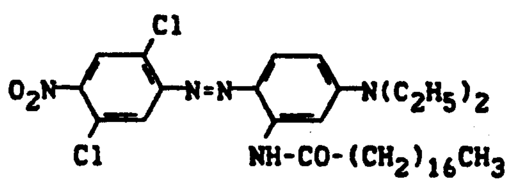 | Rubin |
| Bsp. 41 | 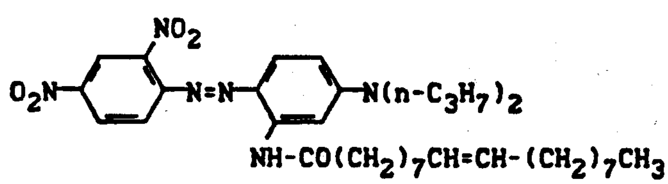 | Violett |
| Bsp. 42 | 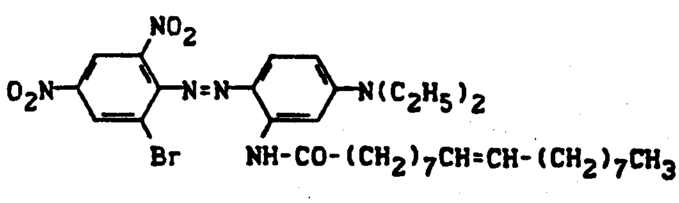 | rotst. Blau |

Tabelle 3 (Fortsetzung)

| | | Farbton des Druckes |
|---|---|---|
| Bsp. 43 | 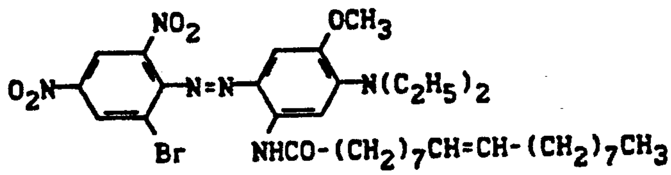 | grünst. Blau |
| Bsp. 44 | 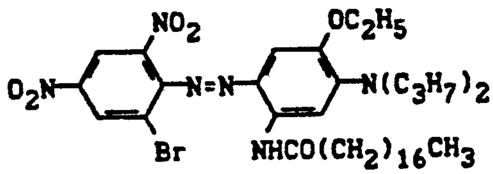 | grünst. Blau |
| Bsp. 45 | 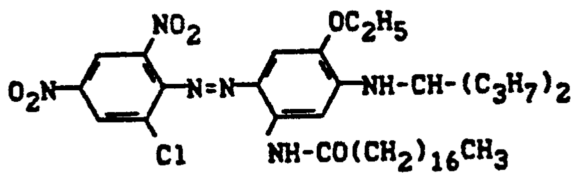 | grünst. Blau |
| Bsp. 46 | 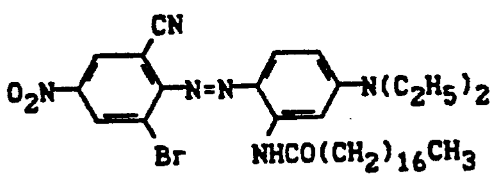 | rotst. Blau |
| Bsp. 47 | 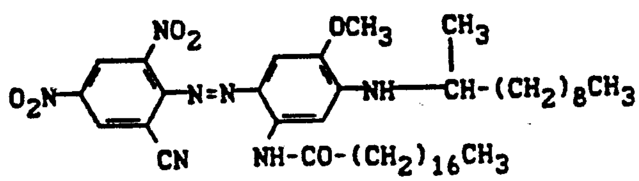 | Blau |
| Bsp. 48 | 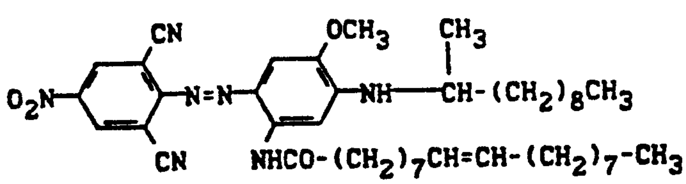 | Blau |

Tabelle 3 (Fortsetzung)

Farbton des Druckes

Bsp. 49 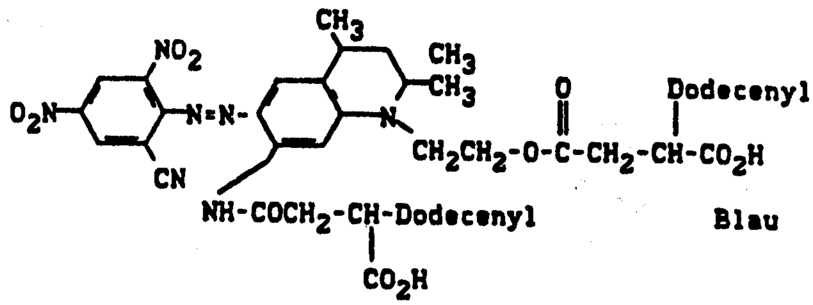 Blau

Bsp. 50 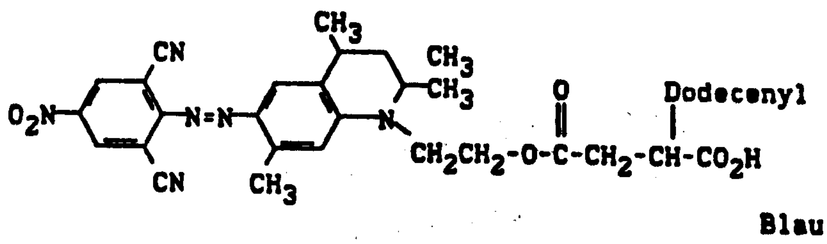 Blau

Bsp. 51 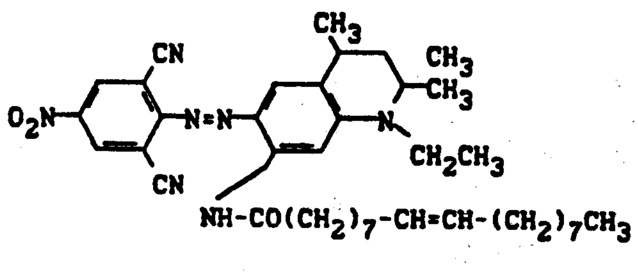 Blau

Bsp. 52 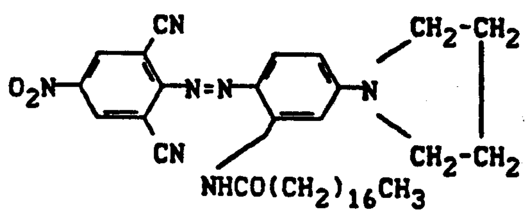 Blau

Bsp. 53 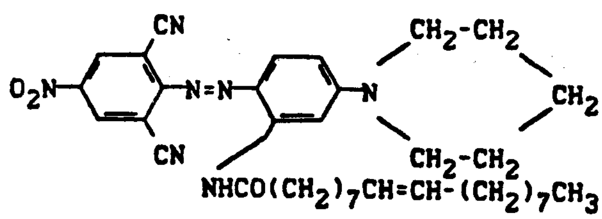 Blau

Tabelle 3 (Fortsetzung)

Farbton des Druckes

Bsp. 54 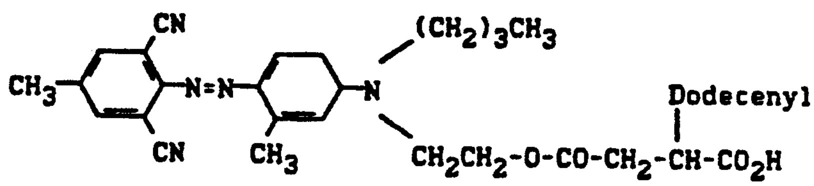

Rot

Bsp. 55 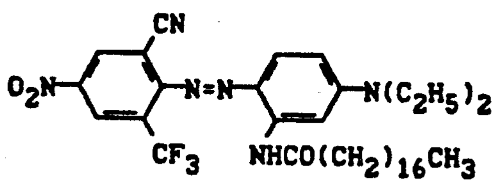

Blau

Bsp. 56 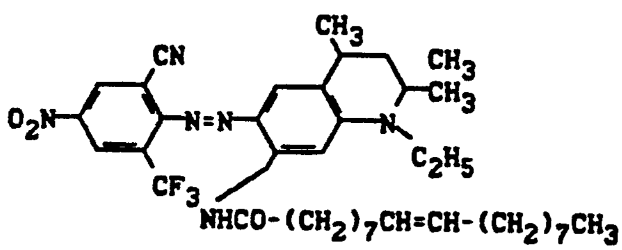

Blau

Bsp. 57 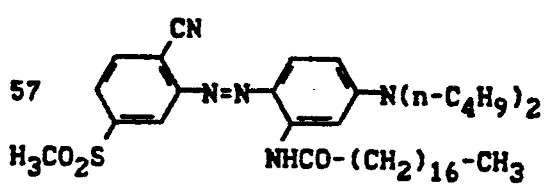

Rot

Bsp. 58 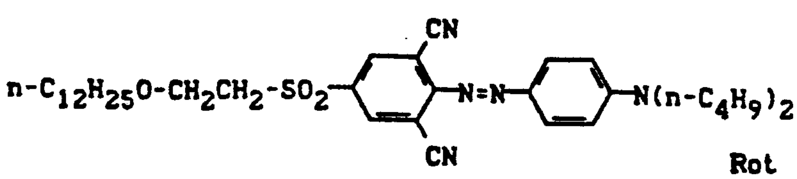

Rot

Tabelle 3 (Fortsetzung)

Farbton des Druckes

Bsp. 59 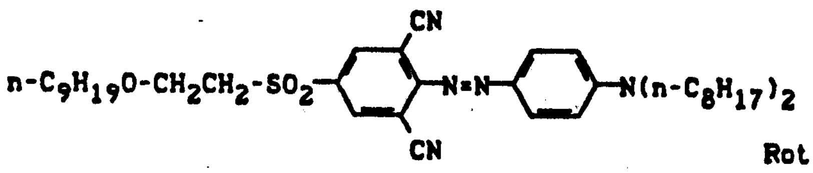

Rot

Bsp. 60 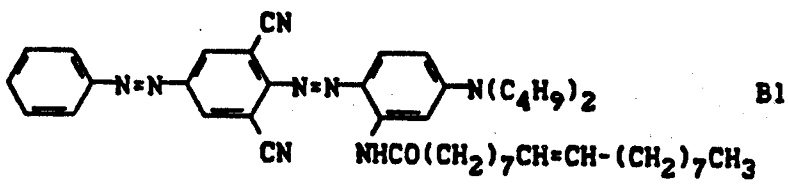

Blau

Bsp. 61 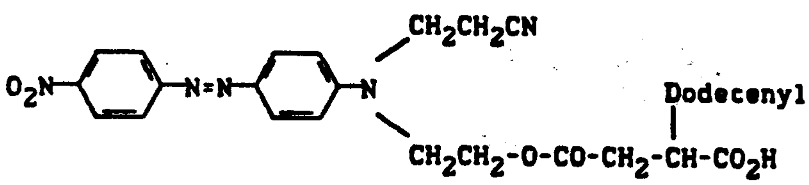

Orange

Bsp. 62 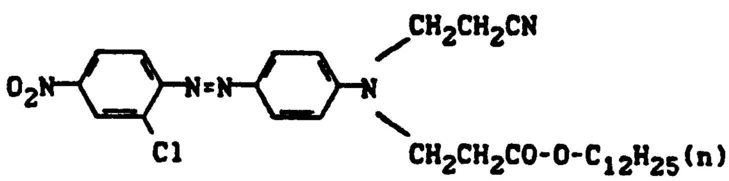

Scharlach

Bsp. 63 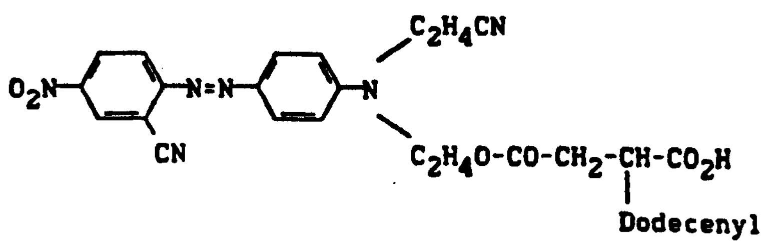

Rot

Tabelle 3 (Fortsetzung)

| | | Farbton des Druckes |
|---|---|---|
| Bsp. 64 | 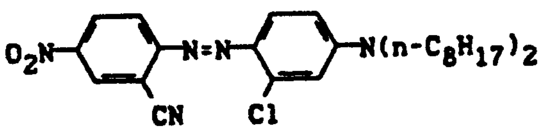 | Rot |
| Bsp. 65 | 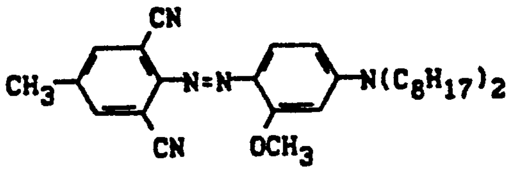 | Rot |
| Bsp. 66 | 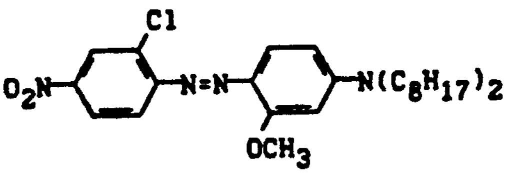 | Rot |

Patentansprüche

1. Verfahren zur Herstellung von Tief- und Flexodruckfarben, dadurch gekennzeichnet, daß man Farbstoffe, die im Druckfarbenansatz zu mindestens 1 Gew.-% bei 20°C löslich sind, zusammen mit feindispersen anorganischen Stoffen einsetzt.

2. Verfahren gemäß Anspruch 1, dadurch gekennzeichnet, daß man Farbstoffe, die ein Druckfarbenansatz zu mindestens 3 Gew.-% bei 20°C löslich sind, einsetzt.

3. Verfahren gemäß Anspruch 1, dadurch gekennzeichnet, daß man Farbstoffe, die im Druckfarbenansatz zu mindestens 5 Gew.-% bei 20°C löslich sind, einsetzt.

4. Verfahren gemäß den Ansprüchen 1-3 zur Herstellung von Druckfarben, die Lösungsmittel enthalten, deren Verdunstungszahl, bezogen auf Ether = 1, $\leq$ 10 ist.

5. Verfahren gemäß den Ansprüchen 1-4, dadurch gekennzeichnet, daß man feindisperse anorganische Stoffe einsetzt, deren spezifische Oberfläche nach BET mindestens 50 $m^2/g$, bevorzugt mindestens 100 $m^2/g$, besonders bevorzugt mindestens 200 $m^2/g$ beträgt.

6. Verfahren gemäß den Ansprüchen 1-5, dadurch gekennzeichnet, daß man die feindispersen anorganischen Stoffe in Mengen von 0,2-2 Gew.-%, bezogen auf das Druckfarbengewicht, einsetzt.

7. Verfahren gemäß den Ansprüchen 1-5, dadurch gekennzeichnet, daß man die feindispersen anorganischen Stoffe in Mengen von 0,4 - 0,9 Gew.-%, bezogen auf das Druckfarbengewicht, einsetzt.

8. Verfahren gemäß den Ansprüchen 1-7, dadurch gekennzeichnet, daß man als feindispersen anorganischen Stoff Kieselsäure einsetzt.

9. Verfahren gemäß den Ansprüchen 1-7, dadurch gekennzeichnet, daß man zusätzlich Dispergiermittel für die feindispersen anorganischen Stoffe einsetzt.

10. Verfahren gemäß den Ansprüchen 1-9 zur Herstellung von Illustrationstiefdruckfarben.